# EUROPEAN PATENT APPLICATION

(11) **EP 4 775 541 A1**
(43) Date of publication of application: **15.07.2026**
(21) Application number: 25225931.2
(22) Date of filing: 19.12.2025
(51) Int. Cl.: C01G 27/00, C01G 35/00, H01M 10/0562, H01M 10/42

(54) **SOLID-STATE ELECTROLYTE, METHOD OF PREPARING SOLID-STATE ELECTROLYTE AND LITHIUM BATTERY INCLUDING SOLID-STATE ELECTROLYTE**

(30) Priority: 24.12.2024 KR 20240196205
(71) Applicant: Samsung Electronics Co., Ltd., Suwon-si, Gyeonggi-do 16677 (KR)
(72) Inventor: KWON, Giyun, 16678 Suwon-si (KR); GWON, Hyeokjo, 16678 Suwon-si (KR); PARK, Hwiyeol, 16678 Suwon-si (KR); BAE, Youngjoon, 16678 Suwon-si (KR); JUNG, Insun, 16678 Suwon-si (KR)
(74) Representative: Elkington and Fife LLP

(57) **Abstract**

Provided is a garnet-type solid-state electrolyte including a compound represented by Formula 1, and including a crystalline phase. The crystalline phase includes a cubic phase, and in a ⁷Li nuclear magnetic resonance spectrum of the solid-state electrolyte, a peak appears at about -2 ppm to about 8 ppm, and a full width at half maximum of the peak is from about 0.3 ppm to about 4.0 ppm. Also provided are a method of preparing the solid-state electrolyte and a lithium battery including the solid-state electrolyte.

Formula 1 (LiₓM1ₓ₁)(La_{y}M2_{y1})(Zr_{z}Aₐ)O_{12+δ}

## Description

### FIELD OF THE INVENTION

The disclosure relates to a solid-state electrolyte, a method of preparing the solid-state electrolyte, and a lithium battery including the solid-state electrolyte.

### BACKGROUND OF THE INVENTION

Due to recent industrial demands batteries with high energy density are required. Lithium batteries have high energy density and are used in wireless earphones and electric vehicles. Moreover, because consumers may, at times, come in direct or close contact with lithium batteries, e.g., their use in wireless earphones, safety of use or operation is of the utmost importance.

Conventional lithium batteries use liquid-state electrolytes containing flammable organic solvents, which may cause overheating and fire hazards in the event of a short circuit. Considering this issue, and for the reason above, all-solid-state batteries using solid-state electrolytes instead of liquid-state electrolytes have been proposed and are of interest.

Oxide-based solid-state electrolytes are relatively stable in air compared to sulfide-based solid-state electrolytes, the latter of which require isolation from air (oxygen), which does present additional design features and may minimize their application. All-solid-state batteries containing oxide-based solid-state electrolytes may be easily manufactured in various sizes and shapes.

### SUMMARY OF THE INVENTION

Provided is a solid state electrolyte that may be prepared at low temperatures and has improved density.

Provided is a lithium battery including the solid state electrolyte.

Provided is a method of preparing the solid state electrolyte.

Additional aspects will be set forth in part in the description which follows and, in part, will be apparent from the description, or may be learned by practice of the presented embodiments of the disclosure.

According to an aspect of the disclosure, a garnet-type solid state electrolyte includes a compound represented by Formula 1, wherein the garnet-type solid-state electrolyte includes a crystalline phase including a cubic phase, and a ⁷Li nuclear magnetic resonance (NMR) spectrum of the solid state electrolyte includes a first peak in a range of about -2 parts per million (ppm) to about 8 ppm, and the full width at half maximum (FWHM) of the peak is about 0.3 ppm to about 4.0 ppm under stated acquisition parameters.

Formula 1 (LiₓM1ₓ₁)(La_{y}M2_{y1})(Zr_{z}Aₐ)O_{12+δ}

wherein in Formula 1, M1 is a monovalent cation, a divalent cation, a trivalent cation, or a combination thereof,
M2 is a monovalent cation, a divalent cation, a trivalent cation, a tetravalent cation, or a combination thereof,
A is two or more elements independently selected from a monovalent cation, a divalent cation, a trivalent cation, a tetravalent cation, or a pentavalent cation,
6≤x≤8, 0≤x1≤2, 0<y≤4, 0≤y1≤4, 0<z≤3, 0<a≤3, and
δ is a value determined to satisfy charge neutrality, wherein -1≤δ≤1.

In Formula 1, 6≤x+x1≤8, 0<y+y1≤4, and 0<z+a≤3.

In Formula 1, 6≤x+x1≤8, 2≤y+y1≤4, and 1≤z+a≤3.

In Formula 1, 6.5≤x+x1≤7.5, 0<y+y1≤3.5, and 0<z+a≤2.5.

In Formula 1, 0≤y1<4, 0≤y1≤3, 0≤y1≤2, 0≤y1≤1, or 0≤y1<1.

In Formula 1, 0<a≤3, 0<a≤2.5, 0<a≤2, 0<a≤1.5, 0<a≤1, 0<a≤0.95, 0<a≤0.9, 0<a≤0.85, 0<a≤0.8, 0<a≤0.7, 0<a≤0.75, 0<a≤0.6, 0<a≤0.65, 0<a≤0.5, 0<a≤0.55, 0<a≤0.4, 0<a≤0.45, 0<a≤0.3, 0<a≤0.35, 0<a≤0.2, 0<a≤0.25, 0<a≤0.15, 0<a≤0.1, 0<a≤0.05, or 0<a≤0.01.

The compound of Formula 1 may be a compound represented by Formula 3.

Formula 3 LiₓLay(Zr_{z}A1ₐ₁Taₐ₂)O₁₂

wherein in Formula 3, A1 is two or more of Na, K, Ca, Mg, Ga, Al, In, or Sc, and 6≤x≤8, 0<y≤4, 0<z≤3, 0<a1≤1, and 0<a2≤2.

The solid state electrolyte may include Li₆.₅La₃Zr₀.₄Hf₀.₄Sn₀.₄Sc₀.₁₅Ta₀.₆₅O₁₂, Li₆.₅La₃Zr₀.₄Hf₀.₄Sn₀.₄In₀.₁₅Nb₀.₆₅O₁₂, Li₇La₃Zr₀.₄Hf₀.₄Sn₀.₄Sc₀.₄Ta₀.₄O₁₂, Li₇La₃Zr₀.₅Hf₀.₅Sc₀.₅Nb₀.₅O₁₂, Li₆.₅La₃Zr_{2/3}Hf_{2/3}Sn_{2/3}O₁₂, or a combination thereof.

According to another aspect of the disclosure, a lithium battery includes a cathode, an anode, and a solid state electrolyte layer disposed between the cathode and the anode,
wherein at least one of the cathode, anode, or solid state electrolyte layer contains a solid state electrolyte, the solid state electrolyte is a garnet-type solid state electrolyte that includes a compound represented by Formula 1, a crystalline phase, including a cubic phase, and a ⁷Li nuclear magnetic resonance (NMR) spectrum of the solid state electrolyte includes a first peak in a range of about -2 ppm to about 8 ppm, and the full width at half maximum (FWHM) of the first peak is about 0.3 ppm to about 4.0 ppm under stated acquisition parameters.

   Formula 1 (LiₓM1ₓ₁)(La_{y}M2_{y1})(Zr_{z}Aₐ)O_{12+δ}
wherein in Formula 1, M1 is a monovalent cation, a divalent cation, a trivalent cation, or a combination thereof,
M2 is a monovalent cation, a divalent cation, a trivalent cation, a tetravalent cation, or a combination thereof,
A is two or more elements independently selected from a monovalent cation, a divalent cation, a trivalent cation, a tetravalent cation, or a pentavalent cation,
6≤x≤8, 0≤x1≤2, 0<y≤4, 0≤y1≤4, 0<z≤3, 0<a≤3, and
δ is a value determined to satisfy charge neutrality, wherein -1≤δ≤1.

According to another aspect of the disclosure, a method of preparing a solid state electrolyte includes providing a solid state electrolyte precursor having an amorphous phase, and heat-treating the solid state electrolyte precursor at a temperature of 700 °C or lower,
wherein the solid state electrolyte includes a compound represented by Formula 1, and has a cubic crystalline phase, and a ⁷Li nuclear magnetic resonance (NMR) spectroscopy spectrum of the solid state electrolyte includes a peak in the range of about -2 ppm to about 8 ppm, and the full width at half maximum (FWHM) of the peak is about 0.3 ppm to about 4.0 ppm under stated acquisition parameters.

   Formula 1 (LiₓM1ₓ₁)(La_{y}M2_{y1})(Zr_{z}Aₐ)O_{12+δ}
wherein in Formula 1, M1 is a monovalent cation, a divalent cation, a trivalent cation, or a combination thereof,
M2 is a monovalent cation, a divalent cation, a trivalent cation, a tetravalent cation, or a combination thereof,
A is two or more elements independently selected from a monovalent cation, a divalent cation, a trivalent cation, a tetravalent cation, or a pentavalent cation,
6≤x≤8, 0≤x1≤2, 0<y≤4, 0≤y1≤4, 0<z≤3, 0<a≤3, and
δ is a value determined to satisfy charge neutrality, wherein -1≤δ≤1.

The solid state electrolyte precursor may include amorphous particles having a size of about 10 nanometers (nm) to about 1,000 micrometers (µm).

The solid state electrolyte precursor having an amorphous phase may be provided by preparing a precursor mixture for forming a solid state electrolyte precursor, and subjecting the precursor mixture to high-energy mechanical milling.

The yield pressure of the solid state electrolyte precursor having an amorphous phase is 494 megapascals (MPa) or less.

According to another aspect of the disclosure, a solid state electrolyte precursor includes an amorphous phase,
wherein the solid state electrolyte includes a compound represented by Formula 1 including a cubic crystalline phase,
the ⁷Li nuclear magnetic resonance (NMR) spectrum of the solid state electrolyte includes a peak in the range of about -2 ppm to about 8 ppm, and the full width at half maximum (FWHM) of the peak is about 0.3 ppm to about 4.0 ppm.

   Formula 1 (LiₓM1ₓ₁)(La_{y}M2_{y1})(Zr_{z}Aₐ)O_{12+δ}
wherein in Formula 1, M1 is a monovalent cation, a divalent cation, a trivalent cation, or a combination thereof,
M2 is a monovalent cation, a divalent cation, a trivalent cation, a tetravalent cation, or a combination thereof,
A is two or more elements selected from a monovalent cation, a divalent cation, a trivalent cation, a tetravalent cation, and a pentavalent cation,
6≤x≤8, 0≤x1≤2, 0<y≤4, 0≤y1≤4, 0<z≤3, 0<a≤3, and
δ is a value determined to satisfy charge neutrality, wherein -1≤δ≤1.

In Formula 1, 6≤x+x1≤8, 2≤y+y1≤4, and 1≤z+a≤3.

In Formula 1, x > x1, and 0 < x1 ≤ 1.

In Formula 1, y > y1, 0 < y ≤ 3, and 0 ≤ y1 ≤ 1.

In Formula 1, z < a, and 0 < z ≤ 0.7.

The solid state electrolyte precursor having an amorphous phase may include a chloride containing a cation represented by Formula 6, a nitrate containing the cation represented by Formula 6, an acetate containing the cation represented by Formula 6, a hydroxide containing the cation represented by Formula 6, a carbonate containing the cation represented by Formula 6, a sulfate containing the cation represented by Formula 6, or an oxide containing the cation represented by Formula 6.

Formula 6 (LiₓM1ₓ₁)(La_{y}M2_{y1})(Zr_{z}Aₐ)

wherein in Formula 6, M1 is at least one of a monovalent cation, a divalent cation, a trivalent cation, or a combination thereof,
M2 is at least one of a monovalent cation, a divalent cation, a trivalent cation, a tetravalent cation, or a combination thereof,
A is two or more elements of a monovalent cation, a divalent cation, a trivalent cation, a tetravalent cation, or a pentavalent cation, and
6≤x≤8, 0≤x1≤2, 0<y≤4, 0≤y1≤4, 0<z≤3, and 0<a≤3.

According to an embodiment, the solid state electrolyte precursor having the amorphous phase may include a compound represented by Formula 1.

Formula 1 (LiₓM1ₓ₁)(La_{y}M2_{y1})(Zr_{z}Aₐ)O₁₂

wherein in Formula 1, M1 is at least one of a monovalent cation, a divalent cation, a trivalent cation, or a combination thereof,
M2 is at least one of a monovalent cation, a divalent cation, a trivalent cation, a tetravalent cation, or a combination thereof,
A is two or more elements of a monovalent cation, a divalent cation, a trivalent cation, a tetravalent cation, or a pentavalent cation, and
6≤x≤8, 0≤x1≤2, 0<y≤4, 0≤y1≤4, 0<z≤3, and 0<a≤3.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 is a graph showing intensity (arbitrary unit, a.u.) versus 2θ (degree, deg.) of X-ray diffraction (XRD) analysis results for solid-state electrolyte precursors prepared in Example 1 and Comparative Examples 1 and 2;
FIG. 2 is a diagram showing pressure (megapascals, MPa) changes according to normal specific volume for solid-state electrolytes prepared in Example 1 and Comparative Examples 1 and 2;
FIG. 3 is a graph showing intensity (arbitrary unit, a.u.) versus 2θ (degree, deg.) of X-ray diffraction (XRD) analysis results for solid-state electrolytes prepared in Example 2 and Comparative Examples 3 and 4;
FIG. 4 is a graph showing ionic conductivity (siemens per centimeter, S/cm) and relative density (percent, %) results for solid-state electrolytes prepared in Example 2 and Comparative Examples 3 and 4;
FIG. 5 is a graph showing intensity (arbitrary unit, a.u.) versus ⁷Li shift (parts per million, ppm) of a ⁷Li nuclear magnetic resonance (NMR) analysis spectrum of solid-state electrolytes prepared in Examples 2 and 3 and Comparative Example 3;
FIG. 6 is a schematic cross-sectional view illustrating the structure of an all-solid-state battery according to an embodiment;
FIG. 7 is a schematic cross-sectional view illustrating the structure of an all-solid-state battery according to an embodiment;
FIG. 8 is another schematic cross-sectional view illustrating the structure of an all-solid-state battery according to an embodiment;
FIG. 9 is a schematic perspective view illustrating the structure of a multilayer ceramic battery according to an embodiment; and
FIG. 10 is a schematic cross-sectional view illustrating the structure of a multilayer ceramic battery according to an embodiment.

### DETAILED DESCRIPTION OF THE EMBODIMENTS

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects. As used herein, the term "and/or" includes any and all combinations of one or more of the associated listed items. Expressions such as "at least one of," when preceding a list of elements, modify the entire list of elements and do not modify the individual elements of the list.

The present inventive concept described herein may undergo various modifications and may have multiple embodiments. Specific embodiments are illustrated in the drawings and described in detail in the specification. However, this is not intended to limit the present inventive concept to any particular embodiment. It should be understood that the present inventive concept includes all modifications, equivalents, or substitutes that fall within the technical scope of the invention.

The terms used herein are for the purpose of explaining specific embodiments only and are not intended to limit the present inventive concept. Unless explicitly stated otherwise in the context, singular expressions shall be understood to include plural forms as well. Hereinafter, the terms "include" or "have" and the like are intended to indicate the presence of features, numbers, steps, operations, components, parts, elements, materials, or combinations thereof described in the specification. However, these terms should not be understood as excluding the possibility of the presence or addition of one or more other features, numbers, steps, operations, components, parts, elements, materials, or combinations thereof. The "/" symbol used herein may be interpreted as "and" or "or", depending on the context.

In the drawings, the thickness of layers and regions may be exaggerated or reduced for clarity. The same reference numerals are used throughout the specification to indicate similar parts. Throughout the specification, when a layer, film, region, plate, or the like is described as being "on" or "above" another part, it includes both cases where it is directly on top of that part and cases where another part is interposed between them. Additionally, the terms "first," "second," etc. may be used to describe various components. However, these components should not be limited by such terms. These terms are used only to distinguish one component from another.

The terminology used herein is for the purpose of describing particular embodiments only and is not intended to be limiting. As used herein, the singular forms "a," "an," and "the" are intended to include the plural forms, including "at least one," unless the content clearly indicates otherwise. Therefore, reference to "an" element in a claim followed by reference to "the" element is inclusive of one element as well as a plurality of the elements.

It will be further understood that the terms "comprises" and/or "comprising," or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

"About" or "approximately" as used herein is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" can mean within one or more standard deviations, or within ±10%, ±5%, or ±3% of the stated value.

As used herein, the term "metal" includes both metals and metalloids (such as silicon and germanium) in their elemental or ionic states.

As used herein, the term "alloy" refers to a mixture of two or more metals.

The term "cathode active material" as used herein refers to a cathode material capable of undergoing lithiation and delithiation, while the term "anode active material" refers to an anode material capable of undergoing lithiation and delithiation.

The terms "lithiation" and "to lithiate" refer to the process of adding lithium to the cathode active material or anode active material, whereas the terms "delithiation" and "to delithiate" refer to the process of removing lithium from the cathode active material or anode active material.

The terms "charging" and "to charge" as used herein refer to the process of providing electrochemical energy to a battery, while the terms "discharging" and "to discharge" refer to the process of removing electrochemical energy from a battery.

The terms "positive electrode" and "cathode" as used herein refer to the electrode where electrochemical reduction and lithiation occur during the discharge process, while the terms "negative electrode" and "anode" refer to the electrode where electrochemical oxidation and delithiation occur during the discharge process.

In this specification, the "particle diameter" of a particle refers to the average diameter if the particle is spherical and the average major axis length if the particle is non-spherical. The particle diameter of a particle may be measured using a particle size analyzer (PSA). The "particle diameter" of a particle refers, for example, to an average particle diameter. The average particle diameter corresponds to a median particle diameter (D50) unless otherwise explicitly stated. The median particle diameter (D50) is the particle size corresponding to the 50 % cumulative value on the particle size cumulative distribution curve, which is obtained by accumulating particle sizes from the smallest to the largest. The cumulative value may, for example, be a cumulative volume. The median particle diameter (D50) may be measured using laser diffraction methods.

When measuring a particle size using a scanning electron microscope, the particle size is determined as the average value of at least 30 randomly selected particles of 1 µm or greater, excluding fine particles.

The average particle diameter of the cathode active material may be measured using, for example, the laser diffraction method. More specifically, the cathode active material is dispersed in a solution and then introduced into a commercially available laser diffraction particle size analyzer (e.g., Microtrac MT 3000). After irradiating ultrasound at about 28 kilohertz (kHz) with an output of 60 watt (W), the average particle diameter (D50) may be calculated based on the 50% cumulative point in the particle size distribution of the measurement device.

As used herein, the term "D10" refers to the average diameter of particles at the 10 % cumulative volume fraction in the particle size distribution, and the term "D90" refers to the average diameter of particles at the 90 % cumulative volume fraction in the particle size distribution.

The term "thickness" refers to the average thickness.

Hereinafter, a solid state electrolyte, its preparation method, and a lithium battery including the same, according to an embodiment, will be described in more detail.

Among oxide solid state electrolytes, garnet-type solid state electrolytes exhibit high ionic conductivity and excellent chemical stability with lithium. However, due to the hard physical properties of garnet-type solid state electrolytes, the interface between the cathode and the solid state electrolyte may have non-uniform contact. To address this issue, a high-temperature sintering process for the cathode and oxide-based solid state electrolyte has been used. When performed according to the high-temperature sintering process, the solid-state battery configuration is achieved through solidification of the solid-state secondary battery, but the overall battery characteristics are not satisfactory. To overcome this, a method has been proposed to lower the processing temperature by amorphizing the precursor of the garnet-type solid state electrolyte, thereby altering the material properties. However, when this method is applied, although it enables low-temperature synthesis and exhibits excellent ionic conductivity, the densification is insufficient, requiring further improvement.

The solid state electrolyte according to an embodiment is manufactured using a solid state electrolyte precursor with an amorphous phase containing multiple cationic elements. The aforementioned solid state electrolyte precursor with an amorphous phase containing multiple cationic elements has soft material properties. By utilizing this precursor, low-temperature heat treatment may achieve sufficient densification, enabling the fabrication of a garnet-type solid state electrolyte containing a cubic phase with high ionic conductivity.

### Solid state electrolyte

The solid state electrolyte according to an embodiment is a garnet-type solid state electrolyte including a compound represented by Formula 1 and including a crystalline phase. The crystalline phase includes a cubic phase, and in the ⁷Li nuclear magnetic resonance (NMR) spectrum of the solid state electrolyte, a peak appears in the range of about -2 ppm to about 8 ppm, and the full width at half maximum (FWHM) of the peak is about 0.3 ppm to about 4.0 ppm.

Formula 1 (LiₓM1ₓ₁)(La_{y}M2_{y1})(Zr_{z}Aₐ)O_{12+δ}

wherein in Formula 1, M1 is a monovalent cation, a divalent cation, a trivalent cation, or a combination thereof,
M2 is a monovalent cation, a divalent cation, a trivalent cation, a tetravalent cation, or a combination thereof,
A is two or more elements independently selected from a monovalent cation, a divalent cation, a trivalent cation, a tetravalent cation, or a pentavalent cation,
6≤x≤8, 0≤x1≤2, 0<y≤4, 0≤y1≤4, 0<z≤3, 0<a≤3, and δ is a value determined to satisfy charge neutrality, wherein -1≤δ≤1.

In Formula 1, 6≤x+x1≤8, 0<y+y1≤4, and 0<z+a≤3.

In Formula 1, 6≤x+x1≤8, 2≤y+y1≤4, and 1≤z+a≤3.

In Formula 1, 6.5≤x+x1≤7.5, 0<y+y1≤3.5, and 0<z+a≤2.5.

In Formula 1, x > x1, and 0 < x1 ≤ 1.

In Formula 1, y > y1, 0 < y ≤ 3, and 0 ≤ y1 ≤ 1.

In Formula 1, z < a, and 0 < z ≤ 0.7.

In Formula 1, 0≤y1<4, 0≤y1≤3, 0≤y1≤2, 0≤y1≤1, or 0≤y1<1.

In Formula 1, 0<a≤3, 0<a≤2.5, 0<a≤2, 0<a≤1.5, 0<a≤1, 0<a≤0.95, 0<a≤0.9, 0<a≤0.85, 0<a≤0.8, 0<a≤0.7, 0<a≤0.75, 0<a≤0.6, 0<a≤0.65, 0<a≤0.5, 0<a≤0.55, 0<a≤0.4, 0<a≤0.45, 0<a≤0.3, 0<a≤0.35, 0<a≤0.2, 0<a≤0.25, 0<a≤0.15, 0<a≤0.1, 0<a≤0.05, or 0<a≤0.01.

A may be three or more elements independently selected from a monovalent cation, a divalent cation, a trivalent cation, a tetravalent cation, or a pentavalent cation.

In Formula 2 and all other formulae as disclosed herein, O₁₂ may be O₁₂₊δ, where: δ is a value determined to satisfy the charge neutrality condition of each compound, and is determined based on the oxidation states and elemental ratios of the constituent elements. For example, -1 ≤ δ ≤ 1.

The full width at half maximum (FWHM) of the first peak in the ⁷Li NMR spectrum of the solid state electrolyte is about 0.5 ppm to about 3.5 ppm, about 0.8 ppm to about 3.5 ppm, about 1.0 ppm to about 3.5 ppm, about 2.0 ppm to about 3.0 ppm, about 2.1 ppm to about 2.8 ppm, about 2.2 ppm to about 2.6 ppm, about 2.2 ppm to about 2.5 ppm, about 2.21 ppm to about 2.5 ppm, about 2.21 ppm to about 2.4 ppm, or about 2.21 ppm to about 2.3 ppm. The full width at half maximum (FWHM) within the aforementioned range may result from the overall formation of a disordered local structure in the solid state electrolyte. Moreover, a person of ordinary skill in the art understands that linewidths in a ⁷Li NMR spectrum is dependent in-part on select acquisition parameters including the relaxation delay. For this reason, the FWHM values recited in the specification and the claims are based upon the select acquisition parameters described in Evaluation Example 4: ⁷Li-NMR Analysis.

The crystalline phase of the solid state electrolyte according to an embodiment includes a cubic phase, wherein the cubic phase constitutes at least 60 weight percent (wt%) of the total crystalline phase, for example, about 60 wt% about 100 wt%. This solid state electrolyte exhibits excellent chemical stability with lithium, a wide electrochemical window, and high ionic conductivity.

In Formula 1, M1, M2 and A may be different elements.

In Formula 1, the monovalent cation (M1) includes at least one or more elements of lithium (Li), sodium (Na), or potassium (K). The divalent to pentavalent cations may include, for example, at least one or more elements of magnesium (Mg), calcium (Ca), strontium (Sr), scandium (Sc), yttrium (Y), lanthanum (La), cerium (Ce), praseodymium (Pr), neodymium (Nd), samarium (Sm), europium (Eu), gadolinium (Gd), terbium (Tb), dysprosium (Dy), holmium (Ho), erbium (Er), thulium (Tm), ytterbium (Yb), lutetium (Lu), zirconium (Zr), hafnium (Hf), vanadium (V), niobium (Nb), tantalum (Ta), molybdenum (Mo), tungsten (W), manganese (Mn), technetium (Tc), rhenium (Re), iron (Fe), ruthenium (Ru), osmium (Os), cobalt (Co), rhodium (Rh), iridium (Ir), nickel (Ni), palladium (Pd), platinum (Pt), copper (Cu), silver (Ag), gold (Au), zinc (Zn), cadmium (Cd), mercury (Hg), aluminum (Al), gallium (Ga), indium (In), thallium (TI), germanium (Ge), tin (Sn), lead (Pb), antimony (Sb), bismuth (Bi), polonium (Po), arsenic (As), selenium (Se), or tellurium (Te).

In Formula 1, M1 may include at least one or more elements of, for example, sodium (Na), potassium (K), gallium (Ga), or aluminum (Al).

In Formula 1, M2 may include at least one or more elements of, for example, calcium (Ca), strontium (Sr), cerium (Ce), or barium (Ba). In formula 1, A may include at least one of, for example, sodium (Na), potassium (K), calcium (Ca), magnesium (Mg), gallium (Ga), aluminum (Al), indium (In), scandium (Sc), niobium (Nb), tantalum (Ta), antimony (Sb), tin (Sn), hafnium (Hf), tungsten (W), tellurium (Te), or a combination thereof.

In Formula 1, x1 may be 0 and/or y1 may be 0.

In Formula 1, 6.1≤x≤8, 6.3≤x≤7.9, 6.5≤x≤7.7, or 6.7≤x≤7.5.

In Formula 1, 0≤x1≤2, 0.5≤x1≤1.8, 0.7≤x1≤1.8, or 1≤x1≤2.

In Formula 1, 2≤y≤3, 2.3≤y≤3, 2.5≤y≤3, or 2.7≤y≤3.

In Formula 1, 0≤x2≤1, 0.3≤x2≤1, 0.5≤x2≤1, or 0.7≤x2≤1.

In Formula 1, 0<z≤2, 0.3≤z≤2, 0.5≤z≤1.8, or 0.7≤z≤1.6.

In Formula 1, 0≤a≤2, 0.1≤a≤2, 0.3≤a≤2, 0.5≤a≤2, or 0.7≤a≤2.

A solid state electrolyte according to an embodiment may include a compound represented by Formula 2, Formula 2-1, or a combination thereof.

Formula 2 LiₓLa_{y}Zr_{z}A1ₐ₁A2ₐ₂O₁₂

wherein in Formula 2, A1 may be at least one of a monovalent cation, a divalent cation, or a trivalent cation,
A2 may be at least one of a tetravalent cation or a pentavalent cation, and
6≤x≤8, 0<y≤4, 0<z≤3, 0<a1≤1, 0<a2≤2, and 0<a1+a2≤3,

   Formula 2-1 LiₓLa_{y}(Zr_{z}A2ₐ₂)O₁₂
wherein in Formula 2-1, A2 may be at least one of a tetravalent cation or a pentavalent cation, and 6≤x≤8, 0<y≤4, 0<z≤3, and 0<a2≤3.

In Formula 2, A1 and A2 may partially substitute Zr, and in Formula 2-1, A2 may partially substitute Zr.

In Formula 2, a1<a2, 0<a1≤0.5, and 0<a2≤1.1.

In Formula 2-1, 1≤z+a≤3, z<a2, 0<z≤1, and 0<a2≤1.5.

In Formula 2, 6≤x≤8, 2≤y≤4, 0<a1≤1, 0<z≤3, 0<a2≤2, and 0<a1+a2≤3.

In Formulae 2 and 2-1, for example, 2≤y≤4 and 1≤z≤3.

In Formula 2-1, 1≤z+a≤3, z<a2, 0<z≤1, and 0<a2≤1.5.

A1 may be at least one of sodium (Na), potassium (K), calcium (Ca), magnesium (Mg), gallium (Ga), aluminum (Al), indium (In), scandium (Sc), or a combination thereof, and A2 may be at least two of tin (Sn), hafnium (Hf), niobium (Nb), tantalum (Ta), or antimony (Sb).

A1 may be Sc, and A2 may be two or more of Sn, Hf, or Ta.

A2 may include Ta and further may include at least one of Sn, Hf, Nb, or Sb.

The compound of Formula 1 may include, for example, a compound represented by Formula 3.

Formula 3 LiₓLa_{y}(Zr_{z}A1ₐ₁Taₐ₂)O₁₂

wherein in Formula 3, A1 is two or more of Na, K, Ca, Mg, Ga, Al, In, or Sc, and 6≤x≤8, 0<y≤4, 0<z≤3, 0<a1≤1, and 0<a2≤2.

In Formula 3, it may be that 6≤x≤8, 2≤y≤4, 0<a1≤1, 0<z≤3, 0<a2≤2, and 0<a1+a2≤3.

In Formula 3, it may be z<a1+a2, 0<z≤0.7, or 0.4≤z≤0.67. Furthermore, it may be 1.3≤a1+a2≤1.6, 1.33≤a1+a2≤1.6, or 1.5≤a1+a2≤1.6.

In Formula 3, it may be 2≤y≤4 and 1≤z≤3.

The compound of Formula 2 may include, for example, a compound of Formula 4, a compound of Formula 5, or a combination thereof.

Formula 4 LiₓLa_{y}Zr_{z}Hfₐ₂₁Snₐ₂₂Scₐ₁Taₐ₂₃O₁₂

wherein in Formula 4, it may be 6≤x≤8, 0<y≤4, 0<z≤3, 0<a1≤1, 0<a21≤0.75, 0<a22≤0.75, 0<a23≤1.5, a21+a22+a23=a2, and 0<a2≤3,

Formula 5 LiₓLa_{y}Zr_{z}Hfₐ₂₁Scₐ₁Nbₐ₂₂O₁₂

wherein in Formula 5, it may be 6≤x≤8, 0<y≤4, 0<z≤3, 0<a1≤1, 0<a21≤0.75, 0<a22≤0.75, and a21+a22=a2.

In Formulae 4 and 5, it may be 2≤y≤4 and 1≤z≤3.

In Formula 4, it may be z<a21+a22+a1+a23, 0<z≤0.7, or 0.4≤z≤0.67. Further, it may be 1.3≤ a21+a22+a1+a23≤1.6, 1.33≤a21+a22+a1+a23≤1.6, or 1.5≤ a21+a22+a1+a23≤1.6.

In Formula 5, it may be z<a21+a22+a1, 0<z≤0.7, or 0.4≤z≤0.67. Further, it may be 1.3≤a21+a22+a1≤1.6, 1.33≤a21+a22+a1≤1.6, or 1.5≤ a21+a22+a1≤1.6.

The compound of Formula 1 according to an embodiment may include, for example, Li₆.₅La₃Zr₀.₄Hf₀.₄Sn₀.₄Sc₀.₁₅Ta₀.₆₅O₁₂, Li₆.₆La₃Zr₀.₄Hf₀.₄Sn₀.₄Sc₀.₂Ta₀.₆O₁₂, Li₇La₃Zr₀.₄Hf₀.₄Sn₀.₄Sc₀.₄Ta₀.₄O₁₂, Li₇La₃Zr₀.₅Hf₀.₅Sc₀.₅Nb₀.₅O₁₂, Li₆.₅La₃Zr_{2/3}Hf_{2/3}Sn_{2/3}O₁₂, or a combination thereof.

The thickness of the solid state electrolyte according to an embodiment may be about 0.1 µm to about 500 µm, about 0.5 µm to about 300 µm, about 1 µm to about 300 µm, about 1 µm to about 200 µm, about 3 µm to about 200 µm, or about 5 µm to about 200 µm.

A solid state electrolyte including an oxide represented by Formula 1 may exhibit densified characteristics even without undergoing a high-temperature sintering process. Its relative density may be 80 % or higher, preferably about 80 % to about 100 %, or about 85 % to about 95 %, which is highly excellent. As used herein, relative density is calculated by measuring the dimensions (diameter, thickness) and mass of the sintered body. It may also be obtained using a pycnometer and the theoretical density of LLZO Li_{6.5}La₃Zr_{1.5}Ta_{0.5}O₁₂ (5.3 g/cm³).

At 25 °C and 1 atmosphere (atm), the ionic conductivity of the solid state electrolyte containing an oxide represented by Formula 1 may be 1 × 10⁻⁵ siemens per centimeters (S/cm) or more, 1 × 10⁻⁴ S/cm or more, about 1 × 10⁻⁴ S/cm to about 1 × 10⁻² S/cm, or about 1 × 10⁻⁴ S/cm to about 1 × 10⁻³ S/cm. The solid state electrolyte containing the oxide represented by Formula 1 may exhibit an increased ionic conductivity within the specified range, thereby improving the charge and discharge characteristics of the lithium battery incorporating the solid state electrolyte. The ionic conductivity of the solid state electrolyte may be measured using impedance analysis, for example.

The solid state electrolyte containing a compound represented by Formula 1 may be electrochemically stable at a voltage of 3.0 volts (V) or higher versus lithium metal, for example, within the range of about 3.0 V to about 4.5 V.

The form of the solid state electrolyte including a compound represented by Formula 1 is not particularly limited. A solid state electrolyte including a compound represented by Formula 1 may be in the form of particles, for example. The particles may be spherical or non-spherical. The particle-shaped solid state electrolyte may be molded into various shapes. The molded solid state electrolyte may be, for example, in the form of a sheet.

### Solid state electrolyte precursor

According to another aspect of the disclosure, a solid state electrolyte precursor may include an amorphous phase,
wherein the solid state electrolyte is a garnet-type solid state electrolyte including a compound represented by Formula 1, and including a crystalline phase.

   Formula 1 (LiₓM1ₓ₁)(La_{y}M2_{y1})(Zr_{z}Aₐ)O₁₂
wherein in Formula 1, M1 is at least one of a monovalent cation, a divalent cation, a trivalent cation, or a combination thereof,
M2 is at least one of a monovalent cation, a divalent cation, a trivalent cation, or a combination thereof,
A is two, three or more elements of a monovalent cation, a divalent cation, a trivalent cation, a tetravalent cation, or a pentavalent cation, and
6≤x≤8, 0≤x1≤2, 0<y≤4, 0≤y1≤4, 0<z≤3, and 0<a≤3.

The solid state electrolyte precursor having an amorphous phase according to an embodiment may be a product obtained, for example, by high-energy mechanical milling of a precursor mixture for forming a solid state electrolyte precursor.

The size of the solid state electrolyte precursor having an amorphous phase may be such that amorphous particles having a size of about 10 nanometers (nm) to about 1,000 µm may be obtained.

As used herein, the term "a precursor mixture for forming a solid state electrolyte precursor" refers to a mixture of precursors that are starting materials used when forming a solid state electrolyte precursor.

The precursors contain lithium precursors, lanthanum precursors, and zirconium precursors, and A element-containing precursors as essential components, and may optionally contain M1 element-containing precursors, and M2 element-containing precursors. The lanthanum precursor, zirconium precursor, M1 element-containing precursor, M2 element-containing precursor and A element-containing precursor will be further described in the solid state electrolyte preparation method section below.

A process of preparing a forming body using the aforementioned amorphous particles may be performed. The forming body may be, for example, a pellet formed by pressurizing the amorphous particles through a pelletizing process. The pressurizing process may be performed within a pressure range of 5 GPa or lower.

The yield pressure of the precursor having an amorphous phase is 494 MPa or less, or about 300 MPa to about 494 MPa. When the yield pressure of the precursor falls within the aforementioned range, it exhibits soft mechanical properties, making densification easier. If densification is easy in this way, the interfacial resistance between the electrode and the solid state electrolyte may be reduced by using such solid state electrolyte.

### Solid state electrolyte preparation method

A method of preparing a solid state electrolyte according to an embodiment may include preparing a solid state electrolyte precursor having an amorphous phase, and heat-treating the solid state electrolyte precursor at a temperature of 700 °C or lower.

The solid state electrolyte includes a compound represented by Formula 1 having a cubic crystal phase, and in the ⁷Li nuclear magnetic resonance (NMR) spectrum of the solid state electrolyte, a peak appears in the range of about -2 ppm to about 8 ppm, and the full width at half maximum (FWHM) of the peak is about 0.3 ppm to about 4.0 ppm.

Formula 1 (LiₓM1ₓ₁)(La_{y}M2_{y1})(Zr_{z}Aₐ)O₁₂

wherein in Formula 1, M1 is at least one of a monovalent cation, a divalent cation, a trivalent cation, or a combination thereof,
M2 is at least one of a monovalent cation, a divalent cation, a trivalent cation, a tetravalent cation, or a combination thereof,
A is two or more elements of a monovalent cation, a divalent cation, a trivalent cation, a tetravalent cation, or a pentavalent cation,
it may be 6≤x≤8, 0≤x1≤2, 0<y≤4, 0≤y1≤4, 0<z≤3, and 0<a≤3.

As used herein, the term "amorphous phase" in a solid state electrolyte precursor having an amorphous phase refers to a phase that does not exhibit significant peaks in X-ray diffraction (XRD) analysis.

The solid state electrolyte precursor having an amorphous phase may be, for example, a compound containing a cation represented by Formula 6.

Formula 6 (LiₓM1ₓ₁)(La_{y}M2_{y1})(Zr_{z}Aₐ)

wherein in Formula 6, M1 is at least one of a monovalent cation, a divalent cation, a trivalent cation, or a combination thereof,
M2 is at least one of a monovalent cation, a divalent cation, a trivalent cation, a tetravalent cation, or a combination thereof,
A is two or more elements of a monovalent cation, a divalent cation, a trivalent cation, a tetravalent cation, or a pentavalent cation, and
6≤x≤8, 0≤x1≤2, 0<y≤4, 0≤y1≤4, 0<z≤3, and 0<a≤3.

In Formula 6, M1, M2 and A may be defined in the same manner as in Formulae 1 to 3.

In Formula 6, it may be 6≤x≤8, 0≤x1≤2, 0<y≤4, 0≤y1≤4, 0<z≤3, and 0<a≤3.

In Formula 6, it may be 6≤x+x1≤8, 0<y+y1≤4, and 0<z+a≤3.

In Formula 6, it may be 6≤x+x1≤8, 2≤y+y1≤4, and 1≤z+a≤3.

In Formula 6, it may be 6.5≤x+x1≤7.5, 0 and 0<y+y1≤3.5, and 0<z+a≤2.5.

In Formula 6 may be 0≤y1<4, 0≤y1≤3, 0≤y1≤2, 0≤y1≤1, or 0≤y1<1.

In Formula 6 may be 0<a≤3, 0<a≤2.5, 0<a≤2, 0<a≤1.5, 0<a≤1, 0<a≤0.95, 0<a≤0.9, 0<a≤0.85, 0<a≤0.8, 0<a≤0.7, 0<a≤0.75, 0<a≤0.6, 0<a≤0.65, 0<a≤0.5, 0<a≤0.55, 0<a≤0.4, 0<a≤0.45, 0<a≤0.3, 0<a≤0.35, 0<a≤0.2, 0<a≤0.25, 0<a≤0.15, 0<a≤0.1, 0<a≤0.05, or 0<a≤0.01.

The compound containing a cation represented by Formula 6 may include, for example, a chloride containing the cation, a nitrate containing the cation, an acetate containing the cation, a hydroxide containing the cation, a carbonate containing the cation, a sulfate containing the cation, an oxide containing the cation, or a combination thereof.

In the aforementioned compounds, the content (stoichiometric equivalents) of anions, such as chloride, nitrate, acetate, carbonate, hydroxide, sulfate, and oxide, may be adjusted to maintain charge neutrality in each compound.

A solid state electrolyte precursor having an amorphous phase may be, for example, an oxide containing a cation represented by Formula 6. A solid state electrolyte precursor having an amorphous phase may specifically contain a compound represented by Formula 1.

Formula 1 (LiₓM1ₓ₁)(La_{y}M2_{y1})(Zr_{z}Aₐ)O₁₂

wherein in Formula 1, M1 is at least one of a monovalent cation, a divalent cation, a trivalent cation, or a combination thereof,
M2 is at least one of a monovalent cation, a divalent cation, a trivalent cation, a tetravalent cation, or a combination thereof,
A is two or more elements of a monovalent cation, a divalent cation, a trivalent cation, a tetravalent cation, or a pentavalent cation, and
it may be 6≤x≤8, 0≤x1≤2, 0<y≤4, 0≤y1≤4, 0<z≤3, and 0<a≤3.

The preparing the solid state electrolyte precursor may include preparing a precursor mixture as a starting material; and subjecting the precursor mixture to high-energy mechanical milling. The precursor mixture, which is the starting material, may vary depending on the composition of the solid state electrolyte precursor.

When the solid state electrolyte precursor having an amorphous phase is a compound of Formula 1 having an amorphous phase, the compound of Formula 1 having an amorphous phase may be prepared by mixing starting materials for forming a compound of Formula 1 to obtain a mixture thereof and subjecting the mixture to mechanochemical synthesis.

When the solid state electrolyte precursor is heat-treated at a temperature of 700 °C or lower, it may be performed, for example, in an inert gas atmosphere or an oxidizing gas atmosphere. The inert gas atmosphere refers to, for example, an argon atmosphere or a helium atmosphere. And the oxidizing gas atmosphere refers to, for example, an oxygen atmosphere or an air atmosphere.

The solid state electrolyte precursor having an amorphous phase may be prepared by mixing starting materials of each element in equivalent ratios and amorphizing the mixture. The starting materials of each element essentially include a lithium precursor, a lanthanum precursor, a zirconium precursor, and an A-element-containing precursor. The starting materials of each element may include a M1-element-containing precursor, a M2-element-containing precursor, or a combination thereof.

The lanthanum precursor, zirconium precursor, M1-element-containing precursor, M2-element- containing precursor, and A-element- containing precursor may each be at least one of oxides, sulfates, chlorides, hydroxides, acetates, carbonates, or a combination thereof, each containing lanthanum, zirconium, M1 elements, M2 elements, and A elements.

The A element-containing precursor may contain at least one of a Na precursor, a K precursor, a Ca precursor, a Mg precursor, a Ga precursor, an Al precursor, an In precursor, a Sc precursor, a Sn precursor, a Hf precursor, a Nb precursor, a Ta precursor, or a Sb precursor.

The A element-containing precursor may contain, for example, at least one of a Sc precursor, a Sn precursor, a Hf precursor, a Nb precursor, a Ta precursor, or a Sb precursor.

Examples of the lanthanum precursor may include La₂O₃, LaCl₃, lanthanum carbonate, lanthanum acetate, lanthanum nitrate, lanthanum hydroxide, and lanthanum sulfate, and examples of the zirconium precursor may include ZrO₂, ZrCl₂, zirconium carbonate, zirconium acetate, zirconium nitrate, zirconium hydroxide, and zirconium sulfate. Further, examples of the tantalum precursor may include Ta₂O₅, TaCl₅, tantalum carbonate, tantalum acetate, tantalum nitrate, tantalum hydroxide, and tantalum sulfate.

For example, the Sc precursor, Sn precursor, Hf precursor, Nb precursor, and Sb precursor may be used in the form of their respective oxides.

The lithium precursor may include, for example, Li₂O, LiCl, LiOH, or Li₂(CO₃). The lanthanum precursor, zirconium precursor, M1-element-containing precursor, M2-element-containing precursor, A-element-containing precursor, and lithium precursor may be used in stoichiometric amounts corresponding to Formula 1.

According to an embodiment, the stoichiometric ratios of (lithium precursor and M1 element-containing precursor), (lanthanum precursor and M2 element-containing precursor) and (zirconium precursor and A element-containing precursor) may be adjusted as 6 to 8, 2 to 4 and 1 to 3, respectively.

The amorphization process may be performed using a mechanochemical synthesis method. Examples may include mechanical milling, etc. Mechanical milling may include high-energy mechanical milling (HEMM). High-energy mechanical milling is a process where mechanical energy is applied to composite components.

High-energy mechanical milling applies high energy to reaction materials through high rotational force, achieving particle micronization, and maximized diffusion between powder particles, inducing chemical reactions. HEMM may be performed using a mechanofusion device or a Nobilta device. Mechanofusion is a dry-state process that utilizes strong physical rotational forces to form a homogeneous mixture, where electrostatic bonding forces between the constituent materials are established. Through this process, fine particles with a uniform distribution may be obtained.

High-energy mechanical milling is, for example, high-energy ball milling, which may be performed using any known ball milling equipment for high-energy ball milling, such as a vibratory mill, a Z-mill, a planetary ball mill, an attrition mill, a SPEX mill, a vibratory mill, a cryogenic grinder, a friction mill, a shaker mill, an agitated ball mill, a mixer ball mill, or a vertical and horizontal attritor mill.

High-energy mechanical milling equipment is commercially available including, but not limited to, SPEX CertiPrep Group LLC (8000 M Mixer/Mill^{®}), Zoz GmbH (Simoloyer^{®}), Retsch GmbH (Planetary Ball Mill PM 200/400/400 MA), and Union Process Inc. (Attritor^{®}). For example, pulverisette 7 Premium line equipment may also be used. Through high-energy milling, the particle size may be reduced to a finer scale. Fine particles are advantageous in terms of reaction kinetics between particles.

The grinding balls used in high-energy ball milling may be stainless steel beads or zirconia (ZrO₂) beads, but are not limited to these materials. The particle size of the grinding balls may range from about 0.5 mm to about 20 mm. The grinding time of high-energy mechanical milling in step (A) may range from about 0.5 hours to about 150 hours.

High energy mechanical milling may be performed dry for about 0.5 hours to about 1000 hours, about 0.5 hours to about 100 hours, or about 10 hours to about 30 hours. High-energy mechanical milling may be performed dry at speeds of, for example, about 300 revolutions per minutes (rpm) to about 10000 rpm, about 350 rpm to about 5000 rpm, or about 370 rpm to about 1000 rpm. High-energy mechanical milling may be performed for about 0.5 hours to about 150 hours. During high-energy ball milling, the temperature may rise up to 200 °C. The pressure may reach an order of magnitude of 6 GPa.

After high-energy mechanical milling, the particle size may be about 1 nm to about 100 µm, about 10 nm to about 80 µm, about 100 nm to about 50 µm, about 500 nm to about 30 µm, about 1 µm to about 10 µm, or about 1 µm to about 5 µm.

High-energy mechanical milling may be performed in an inert atmosphere, which substantially excludes oxygen. The inert atmosphere may include, for example, nitrogen, argon, neon, or a combination thereof. The mechanochemical reaction may be, for example, an exothermic reaction. The reaction forming a solid state electrolyte containing a compound represented by chemical formula 1 may be an exothermic reaction. The temperature of the exothermic reaction may be, for example, about 100 °C to about 500 °C, about 100 °C to about 400 °C, about 100 °C to about 300 °C, or about 100 °C to about 200 °C. Mechanical milling may be performed without using solvents (i.e., in a dry process). Since mechanical milling is conducted dry, post-processing steps such as solvent removal may be eliminated.

During high-energy mechanical milling, an organic solvent may be added if necessary. By performing bead milling in the presence of an organic solvent, the dissolution of lithium (Li) components may be prevented, enabling the production of finely milled powders with a uniform composition.

The organic solvent may be at least one or more of alcohol-based solvents, ketone-based solvents, ester-based solvents, glycol ether-based solvents, hydrocarbon-based solvents, ether-based solvents, glycol-based solvents, or amine-based solvents. Examples of alcohol-based solvents may include methanol, ethanol, butanol, hexanol, benzyl alcohol, isopropyl alcohol, or a combination thereof. Examples of ketone-based solvents may include acetone, methyl ethyl ketone, methyl isobutyl ketone, cyclohexanone, or a combination thereof, and examples of ester-based solvents may include methyl acetate, ethyl acetate, butyl acetate, or a combination thereof. Examples of hydrocarbon-based solvents may include benzene, toluene, xylene, cyclohexane, methylcyclohexane, ethylcyclohexane, mineral oil, n-paraffin, iso-paraffin, or a combination thereof, and examples of ether-based solvents may include 1,3-dioxolane, 1,4-dioxane, tetrahydrofuran, or a combination thereof. Examples of glycol-based solvents may include ethylene glycol, diethylene glycol, propylene glycol, polyethylene glycol, or a combination thereof.

Examples of amine-based solvents may include monoethanolamine, diethylamine, triethanolamine, n-methyl-2-pyrrolidone, 2-amino-2-methyl-1-propanol, N,N-dimethylformamide, or a combination thereof. If a highly hydrophobic solvent is used as an organic solvent, lithium (Li) is less likely to dissolve, making it easier to maintain the cubic crystallinity of LLZO. Additionally, using toluene as an organic solvent may further suppress the formation of impurity phases.

A solid state electrolyte precursor having an amorphous phase according to an embodiment may include an amorphous particle having a size of about 10 nm to about 1,000 µm. The size of the solid state electrolyte precursor may be, for example, about 100 nm to about 10 µm. Here, the size refers to the average particle diameter if the solid state electrolyte precursor is spherical, and the average major axis length if the solid state electrolyte precursor is non-spherical. When a solid state electrolyte precursor having an amorphous phase contains amorphous phase particles having the above-described size, a solid state electrolyte with easy densification may be manufactured. By using such a solid state electrolyte, the interfacial resistance between the electrode and the solid state electrolyte may be reduced, leading to the manufacture of lithium batteries with enhanced cell performance.

A solid state electrolyte precursor having an amorphous phase having the above-described size according to an embodiment may be manufactured through the above-described high-energy mechanical milling.

According to another embodiment, the solid state electrolyte precursor having an amorphous phase may also be prepared through a pulverization process. The pulverization process may include, for example, a grinding process using ball milling.

In the solid state electrolyte preparation method according to an embodiment, the preparing a forming body may include a pelletizing process. The forming body may be a densified structure, such as a pellet.

When preparing a solid state electrolyte precursor having an amorphous phase, the preparing a forming body may be carried out by applying pressure up to 5 gigapascals (GPa), for example, about 0.01 GPa to about 5 GPa. By performing the process within the temperature and pressure range described above, a forming body having a dense matrix may be manufactured.

In a solid state electrolyte preparation method according to an embodiment, the solid state electrolyte precursor is heat-treated at a temperature of 700 °C or lower to prepare the solid state electrolyte. The heat treatment temperature may range from about 400 °C to about 700°C, about 450 °C to about 700 °C, or about 450 °C to about 600 °C. During this heat treatment process, crystallization and sintering occur simultaneously, promoting interparticle connections, which enhance densification.

When the heat treatment temperature falls within the specified range, it improves densification, enabling the preparation of a solid state electrolyte with high ionic conductivity.

In the solid state electrolyte manufacturing process according to an embodiment, if the pelletizing process described above is not performed, a pressurization process may be conducted during heat treatment at 700 °C or lower.

### Lithium battery

A lithium battery according to another embodiment includes a cathode, an anode, and a solid state electrolyte layer disposed between the cathode and the anode, wherein at least one of the cathode, anode, and solid state electrolyte layer includes a solid state electrolyte according to an embodiment.

The lithium battery may be all-solid-state battery. By incorporating the solid state electrolyte described above, the internal resistance of the all-solid-state battery may be reduced, and the cycling performance of the all-solid-state battery may be enhanced.

All-solid-state batteries may be used in electronic devices, vehicles, and other applications. They are not particularly limited and may include lithium-ion batteries, lithium-air batteries, or multi-layered ceramic (MLC) batteries. A more detailed description of these batteries is provided below.

When an all-solid-state battery is prepared using a solid state electrolyte according to an embodiment, a highly uniform interface may be formed between the solid state electrolyte and the cathode. The all-solid-state battery may be, for example, an all-solid-state secondary battery.

A more detailed explanation of all-solid-state batteries is provided below.

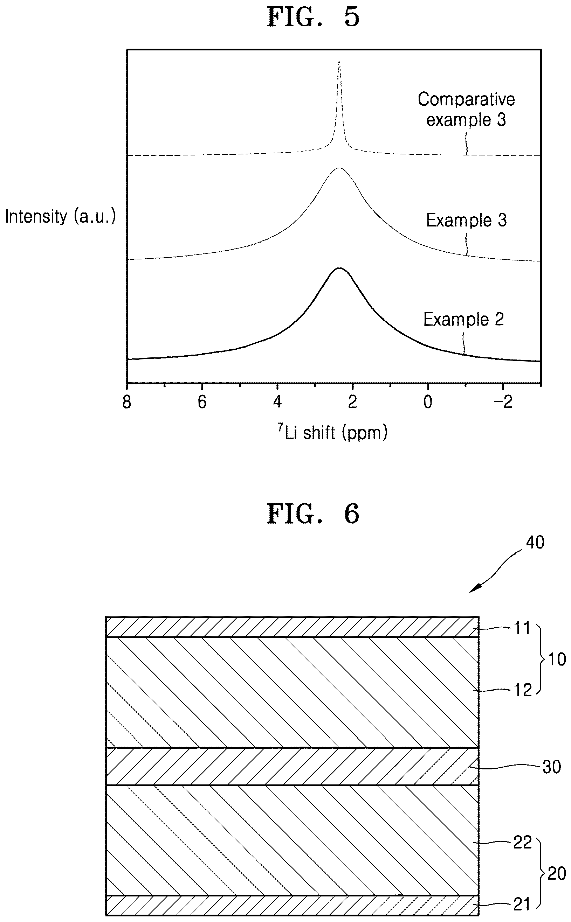

FIG. 6 is a schematic diagram of an all-solid-state secondary battery including a non-depositing anode, according to an embodiment. In an all-solid-state secondary battery that includes a non-depositing anode, during initial charging, the initial charge capacity of the anode active material layer may be greater than 50 % of the initial charge capacity of the cathode active material layer, 60 % or more, 70 % or more, 80 % or more, 90 % or more, or 100 % or more.

An all-solid-state secondary battery may be prepared as follows.

First, a solid state electrolyte layer is prepared. The solid state electrolyte layer includes a solid state electrolyte according to an embodiment. The solid state electrolyte layer may be prepared, for example, by coating and drying a composition for forming a solid state electrolyte layer, or by manufacturing the composition for forming a solid state electrolyte layer in powder form and pressurizing it.

The composition for forming a solid state electrolyte layer may contain a binder. The binder may be, but is not limited to, styrene-butadiene rubber (SBR), polytetrafluoroethylene, polyvinylidene fluoride, polyethylene, polyvinyl alcohol, or any binder used in the relevant technical field. The binder of the solid state electrolyte layer may be the same as or different from the binder used in the cathode and anode.

During the preparation of the solid state electrolyte layer, in addition to the solid state electrolyte of an embodiment, the solid state electrolyte layer may further include oxide-based solid state electrolytes, sulfide-based solid state electrolytes, or a combination thereof.

Next, the cathode is prepared.

The cathode may be prepared by forming a cathode active material layer containing a cathode active material on a cathode current collector. The cathode active material layer may be prepared by a vapor phase method, solid phase method, or a liquid phase method. The vapor deposition method may be, but is not limited to, pulse laser deposition (PLD), sputtering deposition, chemical vapor deposition (CVD), or any other method applicable in the relevant technical field may be used. The solid phase method may include, but is not limited to, a sintering method, a doctor blade method, a screen printing method, a slurry casting method, a powder pressing method, or any other method applicable in the relevant technical field may be used. The liquid phase method may include a sol-gel method.

The cathode active material may include a compound capable of reversible lithium intercalation and deintercalation (lithiated intercalation compound). Specifically, at least one composite oxide including lithium and a metal selected from at least one of cobalt, manganese, nickel, or a combination thereof may be used. The composite oxide may be a lithium transition metal composite oxide, and examples thereof include lithium nickel-based oxide, lithium cobalt-based oxide, lithium manganese-based oxide, lithium iron phosphate-based compound, cobalt-free nickel-manganese-based oxide, or a combination thereof. As an example, a compound represented by any one of the following Formulae may be used. LiₐA₁-_{b}X_{b}O₂-_{c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); LiₐFePO₄ (0.90≤a≤1.8). wherein in Formulae above, A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

The cathode active material layer may additionally include a binder, a conductive material, etc. Examples of binders include, but are not limited to, polyvinyl alcohol, carboxymethyl cellulose, hydroxypropyl cellulose, diacetyl cellulose, polyvinyl chloride, carboxylated polyvinyl chloride, polyvinyl fluoride, polymers containing ethylene oxide, polyvinyl pyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, nylon, and others. Examples of conductive materials include carbon-based materials such as natural graphite, artificial graphite, carbon black, acetylene black, Ketjen black, carbon fibers, carbon nanofibers, and carbon nanotubes; metal-based materials containing copper, nickel, aluminum, and silver in the form of metal powder or metal fibers; conductive polymers such as polyphenylene derivatives; or mixtures thereof.

The cathode current collector may be Al (aluminum), but it is not limited to this material.

The cathode may also include the solid state electrolyte according to an embodiment.

Next, the anode is prepared. The anode may be prepared in the same manner as the cathode, except that an anode active material is used instead of a cathode active material. The anode may be formed by creating an anode active material layer on an anode current collector.

The anode active material may include a material capable of reversibly intercalating/deintercalating lithium ions, lithium metal, lithium metal alloys, a material that may be doped and dedoped with lithium, or a transition metal oxide.

Materials capable of reversible lithium ion intercalation/deintercalation may include a carbon-based anode active materials, including crystalline carbon, amorphous carbon, or a combination thereof. Examples of crystalline carbon include graphite, such as non-shaped graphite, plate-shaped graphite, flake graphite, spherical graphite, or fibrous graphite (natural or artificial). Examples of amorphous carbon include soft carbon, hard carbon, mesophase pitch carbonized material, calcined coke, and others.

The lithium metal alloy may be an alloy of lithium with one or more metals selected from Na, K, Rb, Cs, Fr, Be, Mg, Ca, Sr, Si, Sb, Pb, In, Zn, Ba, Ra, Ge, Al, and Sn.

The material that may be doped and dedoped with lithium may be a Si-based anode active material or a Sn-based anode active material. The Si-based anode active material may include silicon, a silicon-carbon composite, SiOₓ (where 0 < x < 2), a Si-Q alloy, where Q is at least one of an alkali metal, an alkaline earth metal, a Group 13 element, a Group 14 element (excluding Si), a Group 15 element, a Group 16 element, a transition metal, a rare earth element, or a combination thereof. The Sn-based negative electrode active material may include at least one of Sn, SnO₂, a Sn-based alloy, or a combination thereof.

The anode active material layer may further include a binder, a conductive material, and others. The binder and the conductive material may be selected from among the materials used in the cathode active material layer described above.

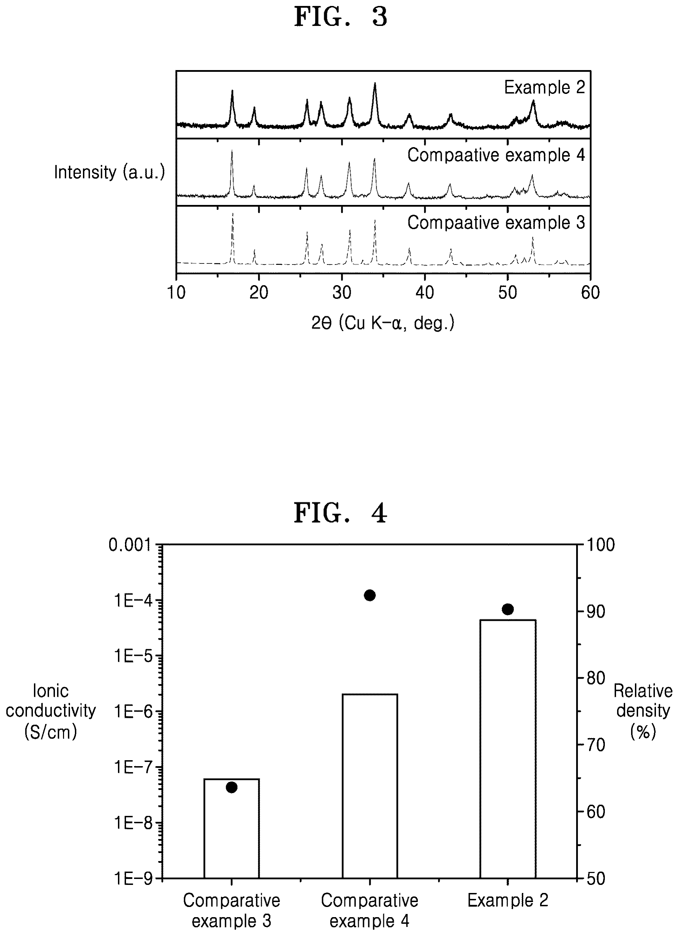

Referring to FIG. 3, the all-solid-state battery 40 may include a solid state electrolyte layer 30, a cathode 10 positioned on one surface of the solid state electrolyte layer 30, and an anode 20 positioned on the other surface of the solid state electrolyte layer 30. The cathode 10 may include a cathode active material layer 12 in contact with the solid state electrolyte layer 30, and a cathode current collector 11 in contact with the cathode active material layer 12. The anode 20 may include an anode active material layer 22 in contact with the solid state electrolyte layer 30, and an anode current collector 21 in contact with the anode active material layer 22. The all-solid-state secondary battery 40 may be prepared by forming the cathode active material layer 12 and anode active material layer 22 on both surfaces of the solid state electrolyte layer 30, and forming the cathode current collector 11 and anode current collector 21 on the respective electrode layers, thereby completing the all-solid-state secondary battery 40. Alternatively, the all-solid-state secondary battery 40 may be constructed by sequentially stacking the anode current collector 21, anode active material layer 22, solid state electrolyte layer 30, cathode active material layer 12, and cathode current collector 11. This layered structure results in the completion of the all-solid-state secondary battery 40.

### Type 2: all-solid-state battery using a deposition-type anode

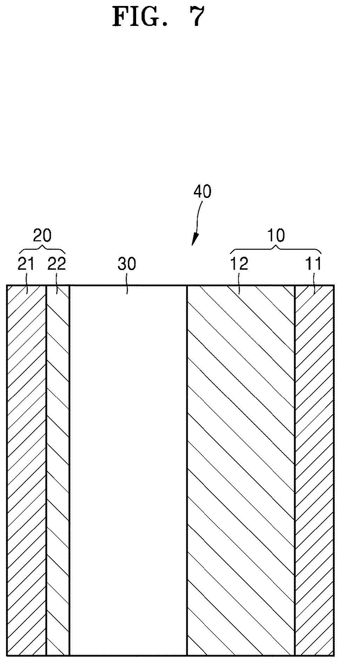

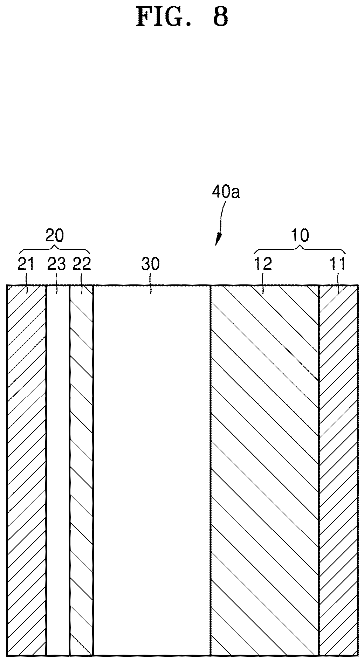

FIGS. 7 and 8 illustrate schematic diagrams of an all-solid-state battery 40 including a deposition-type anode according to an embodiment. The all-solid-state battery 40 may include, for example, a cathode 10 including a cathode active material layer 12 arranged on a cathode current collector 11; an anode 20 including an anode active material layer 22 arranged on an anode current collector 21; and an electrolyte layer 30 arranged between the cathode 10 and anode 20. The cathode active material layer 12 and/or the solid state electrolyte layer 30 may include the solid state electrolyte according to an embodiment.

Referring to FIGS. 7 and 8, the anode 20 may include an anode current collector 21, and an anode active material layer 22 arranged on the anode current collector 21. The anode active material layer 22 may include, for example, an anode active material and a binder.

The anode active material included in the anode active material layer 22 may be in particle form. The average particle diameter of the anode active material may range from 4 µm or less, about 10 nm to about 4 µm, about 10 nm to about 3 µm, about 10 nm to about 2 µm, about 10 nm to about 1 µm, or about 10 nm to about 900 nm. By having an average particle diameter within these ranges, the reversible absorption and/or desorption of lithium during charging and discharging may be facilitated. The average particle diameter of the anode active material may be measured using a laser particle size analyzer, and is defined as the median diameter D50.

The anode active material included in the anode active material layer 22 may include at least one of carbon-based anode active materials and metal or metalloid anode active materials.

The carbon-based anode active material may include, for example, amorphous carbon. Examples of amorphous carbon include carbon black, acetylene black, furnace black (FB), ketjen black (KB), graphene, and others. However, it is not limited to these materials, and any material classified as amorphous carbon in the field may be used.

The metal or metalloid anode active material may include at least one of gold (Au), platinum (Pt), palladium (Pd), silicon (Si), silver (Ag), aluminum (Al), bismuth (Bi), tin (Sn), or Zinc (Zn). The anode active material included in the anode active material layer 22 may be, for example, a mixture of first particles consisting of amorphous carbon and second particles consisting of metal or metalloid materials. The content of the second particles, based on the total weight of the mixture, may be about 8 wt% to about 60 wt%, about 10 wt% to about 50 wt%, about 15 wt% to about 40 wt%, or about 20 wt% to about 30 wt%. Having the second particles within this range may enhance the cycling performance of the all-solid-state secondary battery 40.

The binder included in the anode active material layer 22 may include, for example, styrene-butadiene rubber (SBR), polytetrafluoroethylene, polyvinylidene fluoride, polyvinylidene fluoride-hexafluoropropylene copolymer, polyethylene oxide, polyacrylonitrile, polymethyl methacrylate, carboxymethyl cellulose, hydroxypropyl methyl cellulose, methyl cellulose, or alkali metal salts of these compounds. However, the binder is not limited to these materials, and any binder commonly used in the field may be applied. By including a binder, the anode active material layer 22 may be stabilized on the anode current collector 21. Additionally, during charging and discharging, the binder suppresses cracking in the anode active material layer 22, despite volume changes and/or relative position shifts.

Referring to FIG. 8, the all-solid-state secondary battery 40a may further include a metal layer 23, which is positioned between the anode current collector 21 and the anode active material layer 22. The metal layer 23 may be a metal foil, or plated metal layer. The metal layer 23 may include lithium or a lithium alloy. Thus, the metal layer 23 may function as a lithium reservoir. The lithium alloy may be, for example, a Li-Al alloy, a Li-Sn alloy, a Li-In alloy, a Li-Ag alloy, a Li-Au alloy, a Li-Zn alloy, a Li-Ge alloy, or a Li-Si alloy. The thickness of the metal layer 23 may range from about 1 µm to about 200 µm, about 1 µm to about 100 µm, about 1 µm to about 70 µm, about 1 µm to about 50 µm, about 1 µm to about 30 µm, or about 1 µm to about 20 µm. Having the metal layer 23 within this thickness range enhances the cycling performance of the all-solid-state secondary battery 40a.

In the all-solid-state secondary battery 40a, the metal layer 23 may be disposed between the anode current collector 21 and the anode active material layer 22 before assembling the all-solid-state secondary battery 40a, or deposited between the anode current collector 21 and the anode active material layer 22 during charging, after the assembly of the all-solid-state secondary battery 40a. If the metal layer 23 is placed between the anode current collector 21 and the anode active material layer 22 before assembling the all-solid-state secondary battery 40a, it functions as a lithium reservoir since it is a lithium-containing metal layer. If the metal layer 23 is deposited during charging after the assembly of the all-solid-state secondary battery 40a, the metal layer 23 is not present at the time of assembly, resulting in an increase in the energy density of the all-solid-state secondary battery 40a. Additionally, if the metal layer 23 is formed during charging after the assembly of the all-solid-state secondary battery 40a, the anode current collector 21, anode active material layer 22, and the region between them constitute a Li-free zone, meaning they do not contain lithium (Li) in the initial state or after discharge of the all-solid-state secondary battery 40a.

The anode current collector 21 is made of a material that does not react with lithium, meaning it does not form alloys or compounds with lithium. The material composing the anode current collector 21 may include, for example, copper (Cu), stainless steel, titanium (Ti), iron (Fe), cobalt (Co), and nickel (Ni). However, it is not limited to these materials, and any material commonly used as an electrode current collector in the field may be applied. The anode current collector 21 may be composed of a single metal from the aforementioned metals or an alloy of two or more metals or a coated material.

The all-solid-state secondary battery may further include a thin film on the anode current collector 21, which contains an element capable of forming an alloy with lithium. The thin film is positioned between the anode current collector 21 and the anode active material layer 22. The thin film may include elements capable of forming an alloy with lithium, such as gold (Au), silver (Ag), zinc (Zn), tin (Sn), indium (In), silicon (Si), aluminum (Al), and bismuth (Bi). The thin film may be composed of a single metal or an alloy of multiple metals. By placing the thin film on the anode current collector 21, the deposition morphology of the metal layer 23-which precipitates between the thin film and the anode active material layer 22-becomes more uniform, improving the cycling performance of the all-solid-state secondary battery 40, 40a.

The thin film thickness may range from about 1 nm to about 800 nm, about 10 nm to about 700 nm, about 50 nm to about 600 nm, or about 100 nm to about 500 nm. When the thin film thickness falls within these ranges, the cycling performance of the all-solid-state secondary battery is improved. The thin film may be disposed onto the anode current collector 21 using, for example, vacuum deposition, sputtering, electroplating, or similar methods.

### Multilayer ceramic battery

A multilayer ceramic battery is a small or ultra-small battery suitable for Internet of Things (IoT) applications, and wearable devices. Additionally, multilayer ceramic batteries may be applied to medium- and large-scale batteries, such as electric vehicles (EVs), and energy storage systems (ESSs).

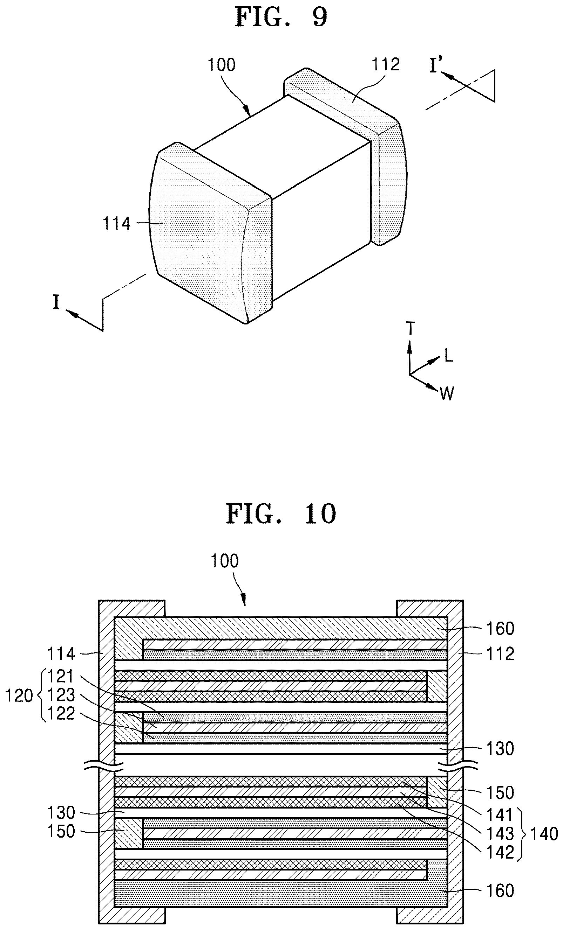

FIG. 9 is a perspective view schematically illustrating a multilayer ceramic battery according to an embodiment. FIG. 10 is a cross-sectional view of a multilayer ceramic battery according to an embodiment. Referring to FIGS. 9 and 10, in the all-solid-state battery 100, the two opposite surfaces along the thickness direction (T-axis direction) are defined as a first surface and a second surface. The two opposite surfaces along the length direction (L-axis direction), which are connected to the first and second surfaces, are defined as a third surface and a fourth surface. For example, in the all-solid-state battery 100, the first side and second side, which are opposite to each other, may correspond to the third surface and fourth surface.

The multilayer ceramic battery 100 may include a cathode 120, an anode 140, and a solid state electrolyte layer 130 arranged between the cathode 120 and the anode 140 in the stacking direction.

The solid state electrolyte layer 130 may include the solid state electrolyte according to an embodiment.

The solid state electrolyte layer 130 may, for example, be positioned in a stacking direction between the cathode active material layers 121, 122 of the cathode 120 and the anode active material layers 141, 142 of the anode 140. Within an all-solid-state battery 100, a plurality of cathodes 120 and anodes 140 may be alternately stacked in a stacking direction, with a plurality of solid state electrolyte layers 130 placed between them. The solid-state battery 100 may be prepared by alternately stacking a plurality of cathodes 120 and anodes 140 in a stacking direction, interposing a plurality of solid state electrolyte layers 130 between each cathode 120 and anode 140, forming an electrode-electrolyte laminate, and sintering the electrode-electrolyte laminate as a whole.

The cathode 120 may include a cathode current collector 123, and cathode active material layers 121 and 122, which are placed on one or both surfaces of the cathode current collector 123. The anode 140 may include an anode current collector 143, and anode active material layers 141 and 142, which are placed on one or both surfaces of the anode current collector 143.

The cathode active material layer 121, 122 may include a cathode active material. The cathode active material may be selected from among cathode active material materials used in all-solid-state batteries. The cathode active material may include at least one of lithium metal phosphate or lithium metal oxides, for example, lithium cobalt oxide, lithium iron phosphate, lithium nickel cobalt manganese oxide, lithium nickel cobalt aluminum oxide, lithium nickel cobalt manganese aluminum oxide, or a combination thereof.

The cathode active material layer may further include a conductive material, a binder, or a combination thereof.

The binder and conductive material may be those mentioned in the binder and conductive material of the all-solid-state battery.

The cathode current collector 123 may include, for example, a metal-based substrate or a carbon-based substrate. As the metal substrate, for example, a porous body, mesh, plate or foil consisting of stainless steel, nickel (Ni), aluminum (Al), indium (In), copper (Cu), magnesium (Mg), titanium (Ti), iron (Fe), cobalt (Co), nickel (Ni), zinc (Zn), germanium (Ge), lithium (Li), or an alloy thereof may be used. The cathode current collector 123 may be, for example, a sintered product of metal powder used in the metal substrate described above. The carbon-based substrate may include, for example, one-dimensional carbon-based materials such as carbon fibers or carbon tubes; two-dimensional carbon-based materials such as graphite or graphene; or a combination thereof. The cathode current collector 123 may further include a binder. The binder may be selected from among the binders used in the cathode active material layer 121, 122. The cathode current collector 123 is optional.

The anode active material layer 141, 142 includes an anode active material.

The anode active material may include, for example, at least one of lithium metal phosphate, lithium metal oxide, metal oxide, or carbon-based anode active materials.

Examples of carbon-based negative electrode active materials may include amorphous carbon, crystalline carbon, porous carbon, or a combination thereof. Examples of crystalline carbon include graphite, such as natural graphite or artificial graphite, which may be non-shaped, plate-like, flake-like, spherical, or fibrous.

Examples of amorphous carbon may include carbon black (CB), acetylene black (AB), furnace black (FB), ketjen black (KB), graphene, soft carbon or hard carbon, mesophase pitch carbide, calcined coke, and others. Amorphous carbon is distinguished from crystalline carbon, as it either lacks crystallinity or has very low crystallinity.

The carbon-based anode active material may include porous carbon. The pore volume contained in the porous carbon is, for example, about 0.1 cubic centimeters per gram (cc/g) to about 10.0 cc/g, about 0.5 cc/g to about 5 cc/g, or about 0.1 cc/g to about 1 cc/g. The average pore diameter of the porous carbon is, for example, about 1 nm to about 50 nm, about 1 nm to about 30 nm, or about 1 nm to about 10 nm. The BET surface area of porous carbon is, for example, about 100 square meters per gram (m²/g) to about 3000 m²/g.

The anode active material may be at least one of Li_{4/3}Ti_{5/3}O₄LiTiO₂, LiM₁ₛM₂ₜOᵤ (where M₁ and M₂ are transition metals, and s, t, and u are arbitrary positive values), TiOₓ (0 < x ≤ 3), or LixV₂(PO₄)₃ (0 < x ≤ 5). The anode active material according to an embodiment may include Li_{4/3}Ti_{5/3}O₄, LiTiO₂, or a combination thereof.

The anode active material layer 141, 142 may further include a conductive material, a binder, or a combination thereof. The conductive material and binder may be selected from those used in the cathode active material layers 121, 122. The amount of conductive material and binder used in the anode active material layers 141, 142 may be selected within the same range as those used in the cathode active material layers 121, 122. During the sintering process of the anode active material layers 141, 142, some or all of the binder may evaporate and/or carbonize, leading to its removal. The binder may be omitted.

The anode current collector 143 may be selected from metal-based substrates or carbon-based substrates, similar to those used for the cathode current collector 123.

The solid state electrolyte layer 130 may include the solid state electrolyte according to an embodiment. The solid state electrolyte layer 130 may further include other oxide-based solid state electrolytes.

Examples of the oxide-based solid state electrolyte may include a garnet-type solid state electrolyte, a nasicon-type solid state electrolyte, a LISICON-type solid state electrolyte, a perovskite-type solid state electrolyte, a LiPON-type solid state electrolyte, an amorphous (glass) solid state electrolyte, or a metal oxide.

The solid state electrolyte layer 130 may further include a binder. The binder may be selected from the binders used in the cathode active material layer 121, 122. The amount of binder used in the solid state electrolyte layer 130 may be selected from the contents of binder used in cathode active material layer 121, 122. The binder may be partially or completely removed by vaporization and/or carbonization during the sintering process of the solid state electrolyte layer 130. The binder is optional.

The solid state electrolyte layer 130 may, for example, be positioned in the stacking direction between the cathode active material layers 121, 122 of the cathode 120 and the anode active material layers 141, 142 of the anode 140. In a multilayer ceramic battery 100, a plurality of cathodes 120 and anodes 140 may be arranged alternately in a stacking direction, and a plurality of solid state electrolyte layers 130 may be arranged between them. A multilayer ceramic battery 100 according to an embodiment may be prepared by alternately arranging a plurality of cathodes 120 and a plurality of anodes 140 in a stacking direction, interposing a plurality of solid state electrolyte layers 130 between each of the alternately arranged cathodes 120 and anodes 140, and preparing an electrode-electrolyte laminate, and sintering the electrode-electrolyte laminate.

A multilayer ceramic battery 100 according to another embodiment may be prepared by alternately arranging a plurality of cathodes 120 and a plurality of anodes 140 in a stacking direction, interposing a solid state electrolyte precursor layers having an amorphous phase between each of the alternately arranged cathodes 120 and anodes 140, and preparing an electrode-electrolyte precursor laminate, and sintering the electrode-electrolyte laminate. During the sintering step, the electrolyte precursor crystallizes into a cubic phase, thereby forming a solid state electrolyte.

A solid state electrolyte precursor layer having an amorphous phase may be placed on a substrate. If the solid state electrolyte precursor layer is in a freestanding state, the substrate may be omitted.

A cathode active material layer may be formed on the solid state electrolyte precursor layer. A cathode current collector is then formed on the opposite side of the cathode active material layer, resulting in a laminate of solid state electrolyte precursor layer / cathode active material / cathode current collector.

Separately, a solid state electrolyte precursor layer is disposed on a substrate, and an anode active material layer is formed on the solid state electrolyte precursor layer. Next, an anode current collector is formed on the opposite side of the anode active material layer, which is formed on the surface of the solid state electrolyte precursor layer, thereby forming a laminate of solid state electrolyte precursor layer / anode active material / anode current collector.

The cathode current collector and the anode current collector each may contain at least one metal of copper, aluminum, nickel, silver, gold, and alloys thereof, a conductive oxide, or a combination thereof. As a specific example, aluminum may be used as the cathode current collector and copper may be used as the anode current collector. The anode current collector may be omitted.

The substrates may be separated and removed from both laminates. The two laminates, after substrate removal, are laminated to form a battery structure. The battery structure may have the following configuration: cathode current collector / cathode active material layer / solid state electrolyte precursor layer / anode active material layer / anode current collector.

The structure may be then sintered to fabricate a single-unit cell with the configuration: cathode current collector / cathode active material layer / solid state electrolyte layer / anode active material layer / Anode current collector.

The sintering process is performed at 700 °C or below. For example, the sintering temperature may range from about 400 °C to about 700 °C, about 450 °C to about 600 °C, or about 500 °C to about 600 °C. During this sintering process, the amorphous solid state electrolyte precursor crystallizes, transforming into a solid state electrolyte.

Further pressurization may be applied to the battery structure. The pressurization may be performed before or simultaneously with sintering. The pressurization may be performed in the range of about 50 MPa to about 500 MPa.

A margin layer 150 may be arranged along the sides of the cathode 120 and the anode 130 to surround at least a portion of the cathode 120 and the anode 130. The margin layer 150 may be arranged on the solid state electrolyte layer 130 and positioned adjacent to the sides of the cathode active material layers 121, 122 and/or the anode active material layers 141, 142, extending along the sides and surrounding at least a portion of the cathode active material layers 121, 122 and/or the anode active material layers 141, 142. The margin layer 150 may be arranged at the same level as the cathode active material layers 121, 122 and/or the anode active material layers 141, 142.

The margin layer 150 may include either an insulating material or a conductive material. The margin layer 150 may include an insulator with an ionic conductivity of 1/100 or less or 1/1000 or less compared to the solid state electrolyte layer 130. The margin layer 150 may include, for example, an insulating polymer. The insulating polymers may include, but are not limited to, polyolefins such as polyethylene and polypropylene; polyesters such as polyethylene terephthalate (PET); polyurethanes; polyimides; and the like.

The cathode 120, solid state electrolyte layer 130, anode 140, and margin layer 150 may be stacked as described above to form an electrode-electrolyte laminate. A protective layer 160 may be placed on the top and bottom of the electrode-electrolyte laminate. The protective layer may include, for example, an insulating material.

In the multilayer ceramic battery 100, the electrode-electrolyte laminate may expose the terminals of the cathode current collector 123 and the anode current collector 143 on both sides. The exposed terminals may be connected to external electrodes 112, 114. The external electrode 112 connected to the terminal of the exposed cathode current collector 123 may function as a cathode. The external electrode 114 connected to the terminal of the exposed anode current collector 143 may function as an anode.

The external electrodes 112, 114 may include conductive metal and glass.

The conductive metal may include, at least one of, for example, copper (Cu), nickel (Ni), tin (Sn), palladium (Pd), platinum (Pt), gold (Au), silver (Ag), tungsten (W), titanium (Ti), lead (Pb), or alloys thereof.

The glass component included in the external electrodes 112, 114 may be a composition in which oxides are mixed. The glass component may include, at least one of, for example, silicon oxide, boron oxide, aluminum oxide, transition metal oxides, alkali metal oxides, alkaline earth metal oxides, or combinations thereof. The transition metal included in the glass component may be at least one of zinc (Zn), titanium (Ti), copper (Cu), vanadium (V), manganese (Mn), iron (Fe), or nickel (Ni). The alkali metal may be selected from lithium (Li), sodium (Na), or potassium (K), and the alkaline earth metal may be at least one of magnesium (Mg), calcium (Ca), strontium (Sr), or barium (Ba).

The external electrodes 112, 114 may be formed, for example, by dipping a cell stack into a conductive paste containing a conductive metal and glass. The external electrodes 112, 114 may also be formed by printing a conductive paste onto the surface of a cell stack using a screen printing method, a gravure printing method, or the like. The external electrodes 112, 114 may be formed by applying a conductive paste to the surface of a cell stack or by transferring a dried conductive paste film onto the cell stack.

The following provides a detailed explanation with reference to Examples and Comparative Examples; however, the present disclosure is not limited thereto.

### Comparative Example 1: Crystalline solid state electrolyte

To obtain crystalline Li_{6.5}La₃Zr_{1.5}Ta_{0.5}O₁₂, precursors Li₂O, La₂O₃, ZrO₂, and Ta₂O₅ were mixed in a stoichiometric ratio and then heat-treated at 1000 °C. As a result, crystalline Li_{6.5}La₃Zr_{1.5}Ta_{0.5}O₁₂ was obtained in powder form with an average particle diameter (D50) of about 2 µm. This powder is a cubic-phase garnet-type crystalline solid state electrolyte (c-LLZTO).

### Comparative Example 2: Preparation of amorphous solid state electrolyte precursor

To obtain amorphous Li_{6.5}La₃Zr_{1.5}Ta_{0.5}O₁₂ precursors Li₂O, La₂O₃, ZrO₂, and Ta₂O₅ were mixed in a stoichiometric ratio and subjected to high-energy ball milling. The milling was conducted in a dry process under an inert atmosphere at 375 rpm for 15 hours, resulting in the production of an amorphous solid state electrolyte powder, Li_{6.5}La₃Zr_{1.5}Ta_{0.}5O12. The obtained product was in powder form with an average particle diameter (D50) of about 2 µm.

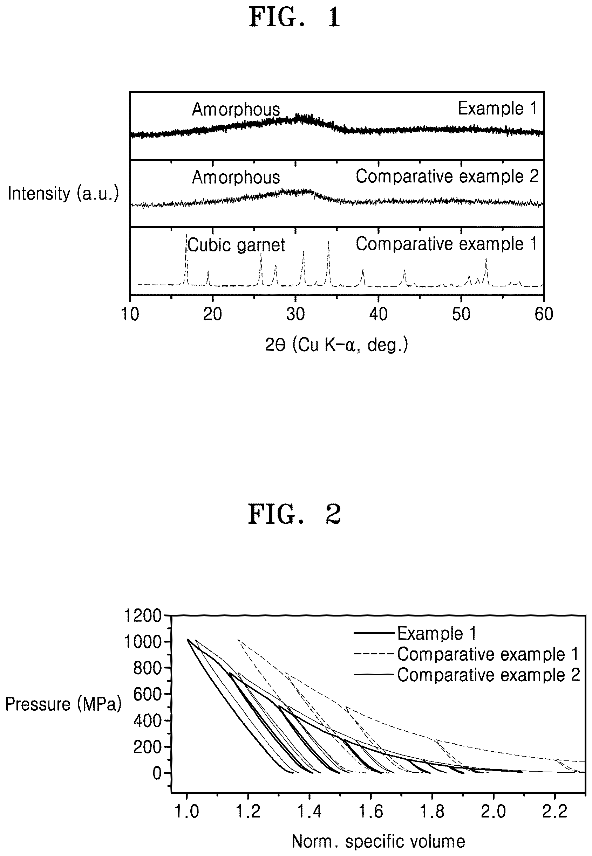

The XRD spectra of the solid state electrolyte from Comparative Example 1 and the solid state electrolyte precursor prepared in Comparative Example 2 were measured, and the results are shown in FIG. 1. XRD spectra were measured using X'pert Pro (PANalytical) with Cu Kα radiation (1.54056 Å).

As shown in FIG. 1, the solid state electrolyte of Comparative Example 1 exhibited a garnet-type crystalline structure, whereas the solid state electrolyte precursor of Comparative Example 2 exhibited an amorphous phase.

### Example 1: Preparation of amorphous solid state electrolyte precursor

To obtain amorphous Li₆.₅La₃Zr₀.₄Hf₀.₄Sn₀.₄Sc₀.₁₅Ta₀.₆₅O₁₂, precursors Li₂O, La₂O₃, ZrO₂, Ta₂O₅, HfO₂, Sc₂O₃, and SnO₂ were mixed in a stoichiometric ratio. The mixture was subjected to high-energy ball milling under an inert atmosphere at 370 rpm for 15 hours in a dry process, yielding an amorphous solid state electrolyte precursor (Li₆.₅La₃Zr₀.₄Hf₀.₄Sn₀.₄Sc₀.₁₅Ta₀.₆₅O₁₂) (a-LLMO) in powder form with an average particle diameter (D50) of about 2 µm.

The XRD spectrum of the solid state electrolyte precursor prepared in Example 1 was measured, and the results are shown in FIG. 1.

Referring to this, the solid state electrolyte precursor of Example 1 exhibited an amorphous phase, similar to the solid state electrolyte precursor of Comparative Example 2.

### Example 2: Preparation of solid state electrolyte

The amorphous solid state electrolyte precursor (a-LLMO) obtained in
Example 1 was pulverized to obtain an amorphous solid state electrolyte precursor powder. The amorphous solid state electrolyte precursor powder was then subjected to pressure-assisted heat treatment at 500 °C under an argon atmosphere and a pressure of 0.25 GPa for 2 hours to form a pelletized solid state electrolyte (d-LLMO).

### Comparative Example 3: Preparation of solid state electrolyte

The garnet-type cubic-phase crystalline solid state electrolyte powder (c-LLZTO) obtained in Comparative Example 1 was subjected to pressure-assisted heat treatment at 600 °C under a pressure of 0.25 GPa for 2 hours to form a pelletized solid state electrolyte (c-LLZTO).

### Comparative Example 4: Preparation of solid state electrolyte

The amorphous solid state electrolyte precursor obtained in Comparative Example 2 was pulverized to obtain amorphous solid state electrolyte precursor powder.

This powder was then subjected to pressure-assisted heat treatment at 500 °C under a pressure of 0.25 GPa for 2 hours to form a pelletized solid state electrolyte.

### Example 3: Preparation of solid state electrolyte

The amorphous solid state electrolyte precursor obtained in Example 1 was pulverized to obtain amorphous solid state electrolyte precursor powder.

The solid state electrolyte precursor powder was subjected to pressure-assisted heat treatment at 600 °C under a pressure of 0.25 GPa for 2 hours to form a pelletized solid state electrolyte.

### Example 4: Preparation of solid state electrolyte

The amorphous solid state electrolyte precursor obtained in Example 1 was pulverized to obtain amorphous solid state electrolyte precursor powder. This powder was then subjected to pressure-assisted heat treatment at 700 °C under a pressure of 0.25 GPa for 2 hours to form a pelletized solid state electrolyte.

The compositions of the solid state electrolyte precursors prepared according to Examples 2 to 4 are shown in Table 1 below.

**Table 1**

| Category | Composition |
|---|---|
| Example 2 | Amorphous Li₆.₅La₃Zr₀.₄Hf₀.₄Sn₀.₄Sc₀.₁₅Ta₀.₆₅O₁₂ |
| Example 3 | Amorphous Li₆.₅La₃Zr₀.₄Hf₀.₄Sn₀.₄Sc₀.₁₅Ta₀.₆₅O₁₂ |
| Example 4 | Amorphous Li₆.₅La₃Zr₀.₄Hf₀.₄Sn₀.₄Sc₀.₁₅Ta₀.₆₅O₁₂ |

### Evaluation Example 1: Mechanical Properties

The mechanical properties of the powder-form solid state electrolyte precursors prepared according to Example 1 and Comparative Examples 1 and 2 were evaluated using a Universal Testing Machine (UTM). The results of the mechanical property evaluation are shown in Table 2 and FIG. 2.

**Table 2**

| Category | Composition | yield pressure (MPa) |
|---|---|---|
| Example 1 | Amorphous Li₆.₅La₃Zr₀.₄Hf₀.₄Sn₀.₄Sc₀.₁₅Ta₀.₆₅O₁₂ | 467.0 |
| Comparative Example 1 | Crystalline Li₆.₅La₃Zr₁.₅Ta₀.₅O₁₂ | 536.5 |
| Comparative Example 2 | Amorphous Li₆.₅La₃Zr₁.₅Ta₀.₅O₁₂ | 494.5 |

As shown in Table 2 and FIG. 2, the solid state electrolyte precursor of Example 1 exhibited a reduced yield pressure compared to the solid state electrolyte precursors of Comparative Examples 1 and 2, indicating that it possesses significantly softer mechanical properties. This demonstrates that the solid state electrolyte precursor of Example 1 achieved improved mechanical properties by utilizing a multi-cation material.

Additionally, the amorphous solid state electrolyte precursor of Comparative Example 2 was prepared using high-energy ball milling, unlike the crystalline solid state electrolyte precursor of Comparative Example 1 and exhibited even softer mechanical properties.

### Evaluation Example 2: Ionic Conductivity

Platinum (Pt) electrodes with a thickness of 20 nm were deposited as blocking electrodes on both sides of the solid state electrolyte pellets prepared in Example 2 and Comparative Examples 3 and 4 via sputtering. Impedance measurements were conducted using an impedance analyzer (Solartron 1400A/1455A) in a two-probe configuration. The frequency range was set between 7 MHz and 1 Hz, with an applied AC amplitude voltage of 10 millivolts (mV). Measurements were performed in an air atmosphere at 1 atm and 25 °C. The resistance values were determined from the arcs of the Nyquist plot obtained from the impedance measurements, and the ionic conductivity was calculated by correcting for electrode area and pellet thickness. The results are shown in Table 3.

**Table 3**

| Category | Ionic conductivity [S/cm] |
|---|---|
| Example 2 | 0.69 X 10⁻⁴ |
| Comparative Example 3 | 4.2 X 10⁻⁸ |
| Comparative Example 4 | 1.24 X 10⁻⁴ |

As shown in Table 3, the solid state electrolyte of Example 2, which was subjected to high-energy ball milling followed by heat treatment at a temperature below 700 °C without undergoing a high-temperature sintering process, exhibited high ionic conductivity. It demonstrated improved ionic conductivity compared to the solid state electrolyte of Comparative Example 3. The solid state electrolyte of Comparative Example 4 exhibited excellent ionic conductivity, as indicated in Table 3. However, as shown in Figure 4 and Table 4, it exhibited reduced relative density characteristics.

### Evaluation Example 3: Relative Density

The relative density of the solid state electrolyte in Example 2 and the solid state electrolytes in Comparative Examples 3 and 4 was measured and is shown in Table 4. The relative density of the pellets was determined as the ratio of the measured density to the theoretical density. The measured density was obtained using a densitometer based on Archimedes' principle or calculated from the apparent volume and weight of the sintered pellet. The theoretical density of LLZTO (Li_{6.5}La₃Zr_{1.5}Ta_{0.5}O₁₂) was set to 5.3 g/cm³.

**Table 4**

| Category | Relative density (%) |
|---|---|
| Example 2 | 88.8 |
| Comparative Example 3 | 64.9 |
| Comparative Example 4 | 77.5 |

Referring to Table 4, it was found that the solid state electrolyte of Example 2 exhibited a significantly increased relative density compared to the solid state electrolytes of Comparative Examples 3 and 4.

Additionally, FIG. 4 illustrates both the lithium-ion conductivity of the solid state electrolytes from Example 2, Comparative Example 3, and Comparative Example 4, as measured in Evaluation Example 2, and the relative density characteristics of these solid state electrolytes, as measured in Evaluation Example 3. Referring to FIG. 4, it was confirmed that the solid state electrolyte of Example 2 exhibited high ionic conductivity while also demonstrating improved densification properties compared to the comparative examples, despite being synthesized at a lower temperature.

### Evaluation Example 4: ⁷Li-NMR Analysis

⁷Li-NMR analysis was performed on the solid state electrolyte of Examples 2 and 3 and the solid state electrolyte of Comparative Example 3, and is shown in FIG. 5. The ⁷Li-NMR analysis was performed under the following conditions.

### Spectrometer: AVANCE HD-III (Bruker)

Observation nucleus: ⁷Li (resonance frequency 117 MHz) Measurement method: MATPASS method, MAS conditions: 25 kHz, Relaxation delay: 0.2 seconds, Number of integrations: 81920 times
Measurement temperature: 25 °C, Reference material: 1 moles per liter (mol/L) LiCl aqueous solution

As shown in FIG. 5, the solid state electrolytes of Examples 2-3 exhibited a first peak and a second peak appearing between -2 ppm and 8 ppm, whereas the solid state electrolyte of Comparative Example 3 exhibited a third peak appearing between 1 ppm and 3 ppm.

The peak centers of the first to third peaks were all found to be at a chemical shift of 2.4 ppm. Here, the peak center refers to the position of the peak apex, which represents the location of maximum intensity.

The full width at half maximum (FWHM) of the first peak in the solid state electrolyte of Example 2, the second peak in the solid state electrolyte of Example 3, and the third peak in the solid state electrolyte of Comparative Example 3 were evaluated and summarized in Table 5.

**Table 5**

| Category | solid state electrolyte Precursor | solid state electrolyte | Synthesis temperature (°C) | ⁷Li-NMR FWHM (ppm) |
|---|---|---|---|---|
| Example 2 | a-LLM0 | d-LLMO | 500 | 2.25 |
| Example 3 | a-LLMO | d-LLMO | 600 | 2.24 |
| Comparative Example 3 | c-LLZTO | c-LLZTO | 600 | 0.17 |

In Table 5, a-LLMO represents amorphous-LLMO, while d-LLMO refers to a cubic-phase solid state electrolyte obtained according to an embodiment of the present disclosure, which may be a slightly disordered crystalline state derived from a-LLMO after heat treatment.

Referring to Table 5, the solid state electrolyte in Comparative Example 3 exhibited an FWHM of 0.17 ppm.

In contrast, the solid state electrolytes of Examples 2 and 3 were synthesized at low temperatures of 500 °C or 600 °C and exhibited a broader peak shape, with an FWHM exceeding 2.0 ppm, compared to those in Comparative Examples 1 and 3. The solid state electrolytes in Examples 2 and 3 contained multiple elements and crystallized at low temperatures, potentially forming a somewhat disordered local structure. This structural disorder was identified as contributing to the increase in FWHM. Through lithium NMR analysis, the differences in the local lithium environment could be clearly distinguished by comparing garnet-type solid state electrolytes synthesized at high temperatures with those formed at lower temperatures.

According to an aspect of the disclosure, a solid state electrolyte with improved densification, high ionic conductivity, and stability is provided, which is heat-treated at a temperature of 700 °C or lower, along with a method for its preparation. By utilizing this solid state electrolyte, a lithium battery with enhanced cycle characteristics can be provided.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope as defined by the following claims.

## Claims

1. A garnet-type solid-state electrolyte comprising a compound represented by Formula 1,
wherein the garnet-type solid-state electrolyte includes a crystalline phase including a cubic phase, and a ⁷Li nuclear magnetic resonance spectrum of the solid-state electrolyte includes a first peak in a range of -2 parts per million to 8 parts per million, and a full width at half maximum of the first peak is 0.3 parts per million to 4.0 parts per million under stated acquisition parameters:
Formula 1 (LiₓM1ₓ₁)(La_{y}M2_{y1})(Zr_{z}Aₐ)O_{12+δ}
wherein in Formula 1,
M1 is a monovalent cation, a divalent cation, a trivalent cation, or a combination thereof,
M2 is a monovalent cation, a divalent cation, a trivalent cation, a tetravalent cation, or a combination thereof,
A is two or more elements independently selected from a monovalent cation, a divalent cation, a trivalent cation, a tetravalent cation, or a pentavalent cation,
6≤x≤8, 0≤x1≤2, 0<y≤4, 0≤y1≤4, 0<z≤3, 0<a≤3, and
δ is a value determined to satisfy charge neutrality, wherein -1≤δ≤1.

2. The garnet-type solid-state electrolyte of claim 1, wherein A of Formula 1 is three or more elements of a monovalent cation, a divalent cation, a trivalent cation, a tetravalent cation, or a pentavalent cation.

3. The garnet-type solid-state electrolyte of claims 1 or 2, wherein A is two or more of sodium, potassium, calcium, magnesium, gallium, aluminum, indium, scandium, niobium, tantalum, antimony, tin, hafnium, tungsten, or tellurium.

4. The garnet-type solid-state electrolyte of any of claims 1-3, wherein the full width at half maximum of the first peak of the solid-state electrolyte is 2.0 parts per million to 3.0 parts per million.

5. The garnet-type solid-state electrolyte of any of claims 1-4, wherein the solid-state electrolyte comprises a compound represented by Formula 2, a compound represented by Formula 2-1, or a combination thereof:
Formula 2 LiₓLa_{y}(Zr_{z}A1ₐ₁A2ₐ₂)O₁₂
wherein in Formula 2,
A1 is at least one of a monovalent cation, a divalent cation, or a trivalent cation,
A2 is at least one of a tetravalent cation or a pentavalent cation, and
6≤x≤8, 0<y≤4, 0<z≤3, 0<a1≤1, 0<a2≤2, and 0<(a1+a2)≤3,
Formula 2-1 LiₓLa_{y}(Zr_{z}A2ₐ₂)O₁₂
wherein in Formula 2-1,
A2 is independently two or more of a tetravalent cation or a pentavalent cation, and
6≤x≤8, 0<y≤4, 0<z≤3, and 0<a2≤3.

6. The garnet-type solid-state electrolyte of claim 5, wherein A1 is at least one of sodium, potassium, calcium, magnesium, gallium, aluminum, indium, scandium, tungsten, or tellurium, and A2 is two or more of tin, hafnium, niobium, tantalum, or antimony;
preferably wherein A1 is scandium (Sc), and A2 is two or more of tin (Sn), hafnium (Hf), or tantalum (Ta).

7. The garnet-type solid-state electrolyte of claims 5 or 6, wherein A2 comprises tantalum (Ta), and further comprises at least one of tin (Sn), hafnium (Hf), niobium (Nb), or antimony (Sb).

8. The garnet-type solid-state electrolyte of any of claims 1-4, wherein the compound of Formula 1 comprises a compound of Formula 4, a compound of Formula 5, or a combination thereof:
Formula 4 LiₓLa_{y}Zr_{z}Hfₐ₂₁Snₐ₂₂Scₐ₁Taₐ₂₃O₁₂
wherein in Formula 4,
6≤x≤8, 2≤y≤4, 1≤z≤3, 0<a1≤1, 0<a21≤0.75, 0<a22≤0.75, 0<a23≤1.5, a21+a22+a23=a2, and 0<a2≤2,
Formula 5 LiₓLa_{y}Zr_{z}Hfₐ₂₁Scₐ₁Nbₐ₂₂O₁₂
wherein in Formula 5,
6≤x≤8, 0<y≤4, 0<z≤3, 0<a1≤1, 0<a21≤0.75, 0<a22≤0.75, and a21+a22 =a2.

9. The garnet-type solid-state electrolyte of any of claims 1-8, wherein the solid-state electrolyte has an ionic conductivity of 1x10⁻⁵ siemens per centimeter or more at 25 °C and 1 atmosphere; and/or
wherein the solid-state electrolyte has a relative density of 80 % or more.

10. A lithium battery comprising:
a cathode; an anode; and a solid-state electrolyte layer disposed between the cathode and the anode,
wherein at least one of the cathode, the anode, or the solid-state electrolyte layer comprises the garnet-type solid-state electrolyte of any of claims 1-9.

11. The lithium battery of claim 10, wherein M1 comprises one or more elements of sodium, potassium, gallium or aluminum, and
M2 comprises one or more elements of calcium, strontium, cesium, or barium.

12. A method of preparing a solid-state electrolyte, the method comprising: providing a solid-state electrolyte precursor having an amorphous phase; and
heat-treating the solid-state electrolyte precursor at a temperature of 700 °C or lower,
wherein the solid-state electrolyte comprises a compound represented by Formula 1, includes a cubic crystalline phase, and a ⁷Li nuclear magnetic resonance spectroscopy spectrum of the solid-state electrolyte includes a peak in a range of -2 parts per million to 8 parts per million, and a full width at half maximum of the peak is 0.3 parts per million to 4.0 parts per million under stated acquisition parameters :
Formula 1 (LiₓM1ₓ₁)(La_{y}M2_{y1})(Zr_{z}Aₐ)O_{12+δ}
wherein in Formula 1, M1 is a monovalent cation, a divalent cation, a trivalent cation, or a combination thereof,
M2 is a monovalent cation, a divalent cation, a trivalent cation, a tetravalent cation, or a combination thereof,
A is two or more elements independently selected from a monovalent cation, a divalent cation, a trivalent cation, a tetravalent cation, or a pentavalent cation,
6≤x≤8, 0≤x1≤2, 0<y≤4, 0≤y1≤4, 0<z≤3, and 0<a≤3, and
δ is a value determined to satisfy charge neutrality, wherein -1≤δ≤1.

13. The method of claim 12,
wherein the solid-state electrolyte precursor is a chloride containing a cation represented by Formula 6, a nitrate containing a cation represented by Formula 6, an acetate containing a cation represented by Formula 6, a hydroxide containing a cation represented by Formula 6, a carbonate containing a cation represented by Formula 6, a sulfate containing a cation represented by Formula 6, or an oxide containing a cation represented by Formula 6:
Formula 6 (LiₓM1ₓ₁)(La_{y}M2_{y1})(Zr_{z}Aₐ)
wherein in Formula 6, M1 is a monovalent cation, a divalent cation, a trivalent cation, or a combination thereof,
M2 is a monovalent cation, a divalent cation, a trivalent cation, a tetravalent cation, or a combination thereof,
A is two or more elements independently selected from a monovalent cation, a divalent cation, a trivalent cation, a tetravalent cation, or a pentavalent cation, and
6≤x≤8, 0≤x1≤2, 0<y≤4, 0≤y1≤4, 0<z≤3, and 0<a≤3.

14. The method of claims 12 or 13, wherein the solid-state electrolyte precursor comprises a compound represented by Formula 1:
Formula 1 (LiₓM1ₓ₁)(La_{y}M2_{y1})(Zr_{z}Aₐ)O_{12+δ}
wherein in Formula 1, M1 is a monovalent cation, a divalent cation, a trivalent cation, or a combination thereof,
M2 is a monovalent cation, a divalent cation, a trivalent cation, a tetravalent cation, or a combination thereof,
A is two or more elements independently selected from a monovalent cation, a divalent cation, a trivalent cation, a tetravalent cation, or a pentavalent cation, and
6≤x≤8, 0≤x1≤2, 0<y≤4, 0≤y1≤4, 0<z≤3, and 0<a≤3.

15. The method of any of claims 12-14, wherein the providing of the solid-state electrolyte precursor comprises providing a precursor mixture, and subjecting the precursor mixture to high-energy mechanical milling; and/or
wherein the heat treatment is performed at 400 °C to 700 °C.
